# EUROPEAN PATENT APPLICATION

(11) **EP 4 636 553 A1**
(43) Date of publication of application: **22.10.2025**
(21) Application number: 24829897.8
(22) Date of filing: 29.02.2024
(51) Int. Cl.: G06F 3/04817

(54) **DATA SHARING METHOD AND ELECTRONIC DEVICE**

(30) Priority: 29.06.2023 CN 202310794454
(71) Applicant: Honor Device Co., Ltd., Shenzhen, Guangdong 518040 (CN)
(72) Inventor: YANG, Yuanyuan, Shenzhen, Guangdong 518040 (CN); QIAN, Kai, Shenzhen, Guangdong 518040 (CN); HUANG, Liwei, Shenzhen, Guangdong 518040 (CN); YU, Ziwei, Shenzhen, Guangdong 518040 (CN)
(74) Representative: Gill Jennings & Every LLP
(86) International application number: PCT/CN2024/079209
(87) International publication number: WO 2025/001241

(57) **Abstract**

Embodiments of this application provide a data sharing method and an electronic device. The method includes: displaying a first interface, where the first interface includes first content and second content; displaying a second interface in response to a first operation performed by a user in the first interface, where the second interface includes a first control corresponding to the first content, a second control corresponding to the second content, and an icon of a first application; displaying a third control in response to a second operation of the user acting on the first control; sharing data corresponding to the first content with the first application in response to a third operation of continuing to drag the third control into a region in which the icon of the first application is located and releasing the third control; displaying a fourth control in response to a fourth operation of the user acting on the second control; and sharing data corresponding to the second content with the first application in response to a fifth operation of continuing to drag the fourth control into the region in which the icon of the first application is located and releasing the fourth control. The method can simplify a user operation and improve user experience.

## Description

This application claims priority to Chinese Patent Application No. 202310794454.X, filed with the China National Intellectual Property Administration on June 29, 2023 and entitled "DATA SHARING METHOD AND ELECTRONIC DEVICE", which is incorporated herein by reference in its entirety.

### TECHNICAL FIELD

This application relates to the field of electronic technologies, and specifically, to a data sharing method and an electronic device.

### BACKGROUND

A large quantity of application programs are usually installed in electronic devices such as a mobile phone and a tablet computer, and can provide many services. In a use process, a user often needs to share content in a current interface with another application program or service for use. In this case, the user needs to first select and copy the content on the interface, then exit the current application program, open another application program, and then paste the copied content into the another application program. The foregoing operation process is relatively complex and user experience is poor.

### SUMMARY

This application provides a data sharing method and an electronic device, so as to quickly, conveniently, and smoothly implement data transmission across applications without needing a user to switch between a plurality of applications, thereby simplifying a user operation and improving user experience.

This application provides a data sharing method. The method is performed by an electronic device, and the method includes:
displaying a first interface, where the first interface includes first content and second content; displaying a second interface in response to a first operation performed by a user in the first interface, where the second interface includes a first control corresponding to the first content, a second control corresponding to the second content, and an icon of a first application; displaying a third control in response to a second operation of the user acting on the first control; detecting a third operation of continuing to drag the third control into a region in which the icon of the first application is located and releasing the third control; sharing data corresponding to the first content with the first application in response to the third operation; displaying a fourth control in response to a fourth operation of the user acting on the second control; detecting a fifth operation of continuing to drag the fourth control into the region in which the icon of the first application is located and releasing the fourth control; and sharing data corresponding to the second content with the first application in response to the fifth operation.

The first interface is, namely, an interface before interface extraction. The second interface is, namely, an interface after interface extraction.

Optionally, the first content and the second content may be one of a text, a picture, a video, a file, a link, and the like. Types of the first content and the second content may be the same or may be different. It may be understood that, in addition to the first content and the second content, the first interface may include other content.

Optionally, the first operation may be a sideward sliding hover operation, or may be a combination of the sideward sliding hover operation and another operation, for example, after the sideward sliding hover operation, continuing to slide by a preset distance to the inner side of the screen, or after the sideward sliding hover operation, tapping a preset control (such as a lock control) in a control bar (such as a side bar).

Optionally, the second interface may be a "magic portal" interface, or may be a "lock state interface".

The first control and the second control are controls that can be used by the user to perform an operation (including the second operation, the third operation, the fourth operation, and the fifth operation) for triggering smart transfer.

Optionally, the second operation and the fourth operation may be long press operations, or may be long press operations after selection, or the like.

Optionally, the third control and the fourth control may be controls in a form of a card, a capsule, a bubble, or the like. The third control and the fourth control may move with a drag operation of the user, that is, the user may drag the third control and the fourth control. The third control and the fourth control may be displayed in a floating manner on the interface.

In the data sharing method provided in the first aspect of this application, the user needs to only use the first operation to trigger display of the second interface, and can trigger, in the second interface by using the second operation and the third operation, to share the data corresponding to the first content with the first application, that is, trigger a smart transfer service, so that cross-application data transmission is quickly, conveniently, and smoothly implemented, and the user does not need to switch between a plurality of applications, thereby simplifying a user operation and improving user experience. In addition, the electronic device simultaneously extracts a plurality of types of content on the interface at a time, and displays a plurality of controls (including the first control and the second control) on the second interface, so that the user selects any one or more types of content for the smart transfer service according to a requirement, thereby facilitating use and further improving user experience. In addition, after data corresponding to the third control is shared with the first application, the user may further perform the fourth operation and the fifth operation, and share data corresponding to the fourth control with the first application. That is, based on the second interface, the user may trigger the smart transfer service for a plurality of times, so that the user does not need to repeatedly perform an interface extraction operation, thereby further simplifying the user operation and improving user experience.

In a possible implementation, the second interface includes a control bar, the control bar includes an icon of at least one application, and the at least one application includes the first application.

That is, the first operation triggers display of the first control, the second control, and the control bar, where the control bar includes an icon of at least one application. The icon of the application is displayed in the control bar, thereby facilitating unified display and management of the icon of the application, and facilitating the user to perform an operation of dragging the control, thereby improving user experience.

In a possible implementation, the method further includes: displaying, in response to the second operation, an icon of a second application that matches the first content; and displaying, in response to the fourth operation, an icon of a third application that matches the second content.

Optionally, an application that matches the first content is a candidate application of the first content, and refers to an application that can receive the first content. Optionally, a corresponding second application may be matched according to a type of the first content. For example, when the first content is a text, the second application that matches the first content may include one or more of share, forward, favorite, notepad, print, translation, and the like. When the first content is a picture, the second application that matches the first content may include one or more of favorite, share, save, print, and object recognition. When the first content is a shopping link, the second application that matches the first content may include one or more of shop, price comparison, favorite, share, and forward. When the first content is an address link, the second application that matches the first content may include one or more of navigation, taxi hailing, favorite, and share.

This is also the case for the icon of the third application that matches the second content, and details are not described again.

In this implementation, in response to an operation of the user acting on a control, an application that matches content corresponding to the control is automatically displayed, and a more flexible sharing service that better matches the content is provided for the user, so that an application that matches the content does not need to be manually searched by the user, thereby further simplifying the user operation and improving user experience.

In a possible implementation, the method further includes: displaying a fifth control in response to a sixth operation of the user acting on the first control; detecting a seventh operation of continuing to drag the fifth control into a region in which the icon of the second application is located and releasing the fifth control; and sharing the data corresponding to the first content with the second application in response to the seventh operation.

Optionally, the sixth operation may be the same as the second operation, may be a long press operation, or may be a long press operation after selection. The fifth control is similar to the third control and the fourth control, and may be a control in a form of a card, a capsule, a bubble, or the like. A part or all of the first content may be displayed on the fifth control.

That is, the user may further perform the sixth operation and the seventh operation based on the first control, so as to share the data corresponding to the first content with an application that matches the first content. In this way, it is convenient to implement a more flexible sharing service, better meet a use scenario and a requirement of the user, and further improve user experience.

Certainly, the user may alternatively perform a related operation based on the second control, so as to share the data corresponding to the second content with an application that matches the second content. Details are not described herein again.

In a possible implementation, the first content is displayed on both the first control and the third control, and the second content is displayed on both the second control and the fourth control.

Optionally, all the first content or a part of the first content may be displayed on the first control and the third control. In addition, content displayed on the first control and the third control may be the same or different. All the second content or a part of the second content may be displayed on the second control and the fourth control. In addition, content displayed on the second control and the fourth control may be the same or different.

In this implementation, content is displayed on the first control, the third control, the third control, and the fourth control, so that the user intuitively learns of a correspondence between the control and the content, and the user operates a corresponding control according to a requirement and triggers smart transfer of content corresponding to the control, thereby improving user experience.

In a possible implementation, the first content is a text, the first interface further includes third content, the third content is a text, the first content and the third content are displayed on the first control, and the second operation is: selecting and long pressing the first content on the second control; and the second content is an image, and the fourth operation is: long pressing the image.

That is, in addition to the first content of a text type, the third content of the text type is displayed on the first interface. In the second interface, the first content and the third content are jointly displayed on the first control. In this case, the user may trigger display of the third control by first selecting the first content and then long pressing the selected content.

Optionally, the user may select the first content by using one or more of a long press, drag, paint, or knuckle screenshot operation.

Optionally, the operation of selecting the first content on the control and the long press operation may be continuous and uninterrupted operations or intermittent operations, that is, lifting the hand after performing the selection operation and then performing the long press operation.

For the second control corresponding to the image in the second interface, the user may trigger display of the fourth control by using a long press operation.

In this implementation, controls corresponding to different types of content provide different operation manners. For a text, the user can select a part or all of the text, and then perform operations such as long press or drag to trigger smart transfer. In this way, it is convenient for the user to select required content to share with another application, and use is more convenient and flexible, thereby further improving user experience.

In a possible implementation, the first content is an entity text, the first interface further includes third content, the third content is a text, the third content and a first sub-control are displayed on the first control, the first content is displayed on the first sub-control, and the second operation is: long pressing the first sub-control.

Optionally, the third content may be an entity text, or may be a general text. The first sub-control may be a control in a form of a capsule, a bubble, or the like. The first sub-control may be displayed in a floating manner or highlighted manner.

In this implementation, a user selection operation is not required for the entity text, and display of the third control may be directly triggered by using a long press operation, so as to simplify the user operation and further improve user experience.

In a possible implementation, the method further includes: displaying a third interface in response to an operation of tapping the first sub-control by the user, where the third interface includes an interface of at least one application that matches the first content.

The third interface is, namely, an interface jumped to after the first sub-control is tapped. Applications displayed on the third interface are different according to different types of the first content. For example, when the first content is a telephone number, the third interface may include an interface of a telephone application program. When the first content is a shopping link, the third interface may include an interface of a shopping application. When the first content is an address link, the third interface may include an interface of a map application program.

In a possible implementation, the first operation is: performing a first sliding operation from a screen edge of the electronic device to an inner side, and staying at an end point of the first sliding operation for more than preset duration, where a sliding distance of the first sliding operation exceeds a first preset distance; and the second interface further includes some or all content of the first interface, and the content of the first interface is displayed with a right perspective effect.

Optionally, in this implementation, the second interface may further include a control bar, the control bar includes an icon of at least one application, and the at least one application includes the first application. That is, the first operation is a sideward sliding hover operation, and the second interface is a "magic portal" interface.

In this implementation, by using a sideward sliding hover operation, display of the first control, the second control, and the first application may be triggered in one step, thereby facilitating a user operation. In addition, the second interface is displayed in an effect of "magic portal", thereby improving a visual display effect and further improving user experience.

In a possible implementation, the first control and the second control are displayed with a right perspective effect.

That is, the first control and the second control are displayed on the portal of the "magic portal".

In a possible implementation, the first control and the second control are displayed in a floating manner above a layer at which the content of the first interface is located.

The two implementations provide different display effects of the first control and the second control, which brings different visual experiences to the user, further improves an interface display effect, and improves user experience.

In a possible implementation, the first content and the second content are links, the first control includes fourth content, the second control includes fifth content, the fourth content is obtained from a web page corresponding to the first content, and the fifth content is obtained from a web page corresponding to the second content.

Optionally, the fourth content may be different according to different link types of the first content. The fifth content may be different according to different link types of the second content. For example, when the first content is a shopping link, the fourth content may be an article picture in a shopping page corresponding to the shopping link. When the first content is a news link, the fourth content may be a news title, an abstract, a picture, or the like in a news web page corresponding to the news connection. This is also the case for the second content and the fifth content, and details are not described again.

In this implementation, the fourth content is displayed in the first control, and the fifth content is displayed in the second control, so as to implement visualization of the first control and the second control. The user can intuitively learn of key information in a web page corresponding to a link, so that the user selects a required control to trigger smart transfer, thereby improving user experience.

In a possible implementation, the first operation is: performing a first sliding operation from a screen edge of the electronic device to an inside side, staying at an end point of the first sliding operation for more than preset duration, and then continuing to perform a second sliding operation; and a sliding distance of the first sliding operation exceeds a first preset distance, and a sliding distance of the second sliding operation exceeds a second preset distance; and the displaying a second interface in response to a first operation performed by a user on the first interface includes: displaying a fourth interface in response to the user performing the first sliding operation from the screen edge of the electronic device to the inner side, and staying at the end point of the first sliding operation for more than the preset duration, where the fourth interface includes a control bar, the control bar includes an icon of at least one application, and the at least one application includes the first application; and displaying the second interface in response to the user continuing to perform the second sliding operation.

That is, the fourth interface is an interface that includes a control bar in a temporary state.

In a possible implementation, the first operation is: performing a first sliding operation from a screen edge of the electronic device to an inner side, staying at an end point of the first sliding operation for more than preset duration, and then tapping a sixth control, where a sliding distance of the first sliding operation exceeds a first preset distance; and the displaying a second interface in response to a first operation performed by a user on the first interface includes: displaying a fifth interface in response to the user performing the first sliding operation from the screen edge of the electronic device to the inner side, and staying at the end point of the first sliding operation for more than the preset duration, where the fifth interface includes a control bar, the control bar includes an icon of at least one application and the sixth control, and the at least one application includes the first application; and displaying the second interface in response to the user tapping the sixth control.

That is, the fifth interface is an interface that includes a control bar in a temporary state. Optionally, the fourth interface may be the same as or different from the fifth interface.

The sixth control is also referred to as a lock control.

In a possible implementation, the second operation and the third operation are continuous and uninterrupted operations; and the fourth operation and the fifth operation are continuous and uninterrupted operations.

In this implementation, the second operation and the third operation are continuous and uninterrupted operations, and the fourth operation and the fifth operation are continuous and uninterrupted operations, thereby further simplifying a user operation and improving user experience.

In a possible implementation, the displaying a second interface in response to a first operation performed by a user in the first interface includes: extracting target content in the first interface in response to the first operation, where the target content includes the first content and the second content; and displaying the second interface according to the target content.

The target content is, namely, content extracted in the first interface.

According to a second aspect, an embodiment of this application provides a data sharing method, the method is performed by an electronic device, and the method includes:
displaying a first interface, where the first interface includes a first control and a second control; displaying a third control in response to a first operation of a user acting on the first control; detecting a second operation of dragging the third control into a first region on a screen; displaying an icon of a first application in response to the second operation; detecting a third operation of continuing to drag the third control into a region in which the icon of the first application is located and releasing the third control; sharing first data corresponding to the third control with the first application in response to the third operation; displaying a fourth control in response to a fourth operation of the user acting on the second control; detecting a fifth operation of dragging the fourth control into the first region; displaying an icon of a second application in response to the fifth operation; detecting a sixth operation of continuing to drag the fourth control into a region in which the icon of the second application is located and releasing the fourth control; and sharing second data corresponding to the fourth control with the second application in response to the sixth operation.

The first interface is, namely, an interface after interface extraction. It may be understood that, in addition to the first control and the second control, the first interface may include another control.

Optionally, the first operation and the fourth operation may be long press operations, or may be long press operations after selection, or the like.

The first region may be a region at a preset position on the interface, for example, the right 1/4 region of a screen.

Optionally, the third control and the fourth control may be controls in a form of a card, a capsule, a bubble, or the like. The third control and the fourth control may move with a drag operation of the user, that is, the user may drag the third control and the fourth control. The third control and the fourth control may be displayed in a floating manner on the interface.

In the data sharing method provided in the second aspect of this application, the user may use the first operation, the second operation, and the third operation in the first interface to share the data corresponding to the first content with the first application, that is, trigger a smart transfer service, so that cross-application data transmission is quickly, conveniently, and smoothly implemented, and the user does not need to switch between a plurality of applications, thereby simplifying a user operation and improving user experience. In addition, a plurality of controls (including the first control and the second control) are displayed on the first interface, so that the user selects any one or more types of content for the smart transfer service according to a requirement, thereby facilitating use and further improving user experience. In addition, after data corresponding to the third control is shared with the first application, the user may further perform the fourth operation, the fifth operation, and the sixth operation, and share data corresponding to the fourth control with the second application. That is, based on the first interface, the user may trigger the smart transfer service for a plurality of times, so that the user does not need to repeatedly perform an interface extraction operation, thereby further simplifying the user operation and improving user experience.

In a possible implementation, the first operation, the second operation, and the third operation are continuous and uninterrupted operations. The fourth operation, the fifth operation, and the sixth operation are continuous and uninterrupted operations.

That is, by using one operation, the user may trigger smart transfer once to implement cross-application data transmission, thereby further simplifying a user operation and improving user experience.

In a possible implementation, before the displaying a first interface, the method further includes: displaying a second interface, where the second interface includes first content and second content; and the first content is content corresponding to the first data, and the second content is content corresponding to the second data; and displaying the first interface in response to a seventh operation performed by the user in the second interface, where the first control is a control corresponding to the first content, and the second control is a control corresponding to the second content.

The second interface is an interface before interface extraction. Optionally, the first content and the second content may be one of a text, a picture, a video, a file, a link, and the like. Types of the first content and the second content may be the same or may be different. It may be understood that, in addition to the first content and the second content, the second interface may include other content.

In this implementation, the user only needs to use the seventh operation to trigger extraction of a plurality of types of content on the interface, so as to display a plurality of corresponding controls on the first interface, so as to facilitate the user to operate a required control according to a requirement to trigger smart transfer, thereby improving user experience.

In a possible implementation, the seventh operation is one of a double-finger long press operation, a three-finger leftward sliding operation, a three-finger rightward sliding operation, a knuckle upward sliding operation, a knuckle leftward sliding operation, or a knuckle rightward sliding operation.

In a possible implementation, the displaying an icon of a first application in response to the second operation includes: displaying a third interface in response to the second operation, where the third interface includes content of the second interface and a control bar, the control bar includes an icon of at least one application, the at least one application includes the first application, and the content of the second interface is displayed with a right perspective effect.

The third interface is, namely, a "magic portal" interface. The "magic portal" interface can improve a visual display effect and further improve user experience.

In a possible implementation, the at least one application includes an application that matches the first content.

In this implementation, in response to the second operation of the user, an application that matches the first content is automatically displayed, and a more flexible sharing service that better matches the content is provided for the user, so that an application that matches the content does not need to be manually searched by the user, thereby further simplifying the user operation and improving user experience.

It may be understood that, when the user performs the fourth operation, the "magic portal" interface may also be displayed, and an application that matches the second content may be displayed in a control bar on the interface, and details are not described herein again.

In a possible implementation, before the displaying a fourth control in response to a fourth operation of the user acting on the second control, the method further includes: restoring display of the first interface.

It may be understood that restoring display of the first interface refers to displaying an interface. The interface includes at least the first control and the second control that can be used by the user to trigger smart transfer. Specific content displayed on the interface may be the same as or different from specific content displayed on the first interface.

In this implementation, the first interface is restored for display, so that the user performs a related operation again to trigger the smart transfer service, and the user does not need to perform, for a plurality of times, an operation of triggering interface extraction, thereby simplifying a user operation, and improving user experience.

In a possible implementation, the third interface includes the first control and the second control.

That is, after the "magic portal" interface is displayed, the first control and the second control may be further displayed on the "magic portal" interface, so that the user performs a related operation again to trigger the smart transfer service, and the user does not need to perform, for a plurality of times, an operation of triggering interface extraction, thereby simplifying a user operation, and improving user experience.

Optionally, the first control and the second control may be displayed on the third interface with a right perspective effect, or may be displayed in a floating manner above a layer at which other content is located.

In a possible implementation, the first application is the same as or different from the second application.

That is, when the smart transfer service is performed for a plurality of times, applications for receiving data may be the same or may be different.

According to a third aspect, this application provides an apparatus. The apparatus is included in an electronic device, and has a function of implementing behavior of the electronic device in the first aspect and the possible implementations of the first aspect. The function may be implemented by hardware, or may be implemented by hardware by executing corresponding software. The hardware or the software includes one or more modules or units corresponding to the foregoing functions, for example, a receiving module or unit or a processing module or unit.

According to a fourth aspect, this application provides an apparatus. The apparatus is included in an electronic device, and the apparatus has a function of implementing behavior of the electronic device in the second aspect and the possible implementations of the second aspect.

According to a fifth aspect, this application provides an electronic device, where the electronic device includes a processor, a memory, and an interface, where the processor, the memory, and the interface cooperate with each other, so that the electronic device performs any method in the technical solutions of the first aspect, or the electronic device performs any method in the technical solutions of the second aspect.

According to a sixth aspect, this application provides a chip, including a processor. The processor is configured to: read and execute a computer program stored in a memory, to perform the method according to the first aspect and any possible implementation of the first aspect, or to perform the method according to the second aspect and any possible implementation of the second aspect.

Optionally, the chip further includes the memory, and the memory is connected to the processor by using a circuit or a wire.

Further, optionally, the chip further includes a communication interface.

According to a seventh aspect, this application provides a computer-readable storage medium. The computer-readable storage medium stores a computer program, and the computer program, when executed by a processor, causes the processor to perform any method in the technical solutions of the first aspect or any method in the technical solutions of the second aspect.

According to an eighth aspect, this application provides a computer program product. The computer program product includes computer program code. When the computer program code runs on an electronic device, the electronic device is enabled to perform any method in the technical solutions of the first aspect, or the electronic device is enabled to perform any method in the technical solutions of the second aspect.

### BRIEF DESCRIPTION OF DRAWINGS

FIG. 1 is a schematic diagram of an interface of an example "magic portal" according to an example of this application;
FIG. 2A and FIG. 2B are a schematic diagram of an interface of another example "magic portal" according to an embodiment of this application;
FIG. 3A to FIG. 3E are a schematic diagram of an interface change of an example data sharing method according to an embodiment of this application;
FIG. 4A to FIG. 4D are a schematic diagram of an interface change of an example data sharing method according to an embodiment of this application;
FIG. 5A and FIG. 5B are a schematic diagram of an interface change of another example data sharing method according to an embodiment of this application;
FIG. 6A to FIG. 6F are a schematic diagram of an interface change of still another example data sharing method according to an embodiment of this application;
FIG. 7A to FIG. 7D are a schematic diagram of an interface change of still another example data sharing method according to an embodiment of this application;
FIG. 8A to FIG. 8D are a schematic diagram of an interface change of still another example data sharing method according to an embodiment of this application;
FIG. 9A to FIG. 9E are a schematic diagram of an interface change of still another example data sharing method according to an embodiment of this application;
FIG. 10A to FIG. 10C are a schematic diagram of an interface change of still another example data sharing method according to an embodiment of this application;
FIG. 11 is a schematic diagram of an example service interface according to an embodiment of this application;
FIG. 12 is a schematic diagram of another example service interface according to an embodiment of this application;
FIG. 13A to FIG. 13F are a schematic diagram of an interface change of still another example data sharing method according to an embodiment of this application;
FIG. 14A to FIG. 14F are a schematic diagram of an interface change of still another example data sharing method according to an embodiment of this application;
FIG. 15 is a schematic flowchart of an example data sharing method according to an embodiment of this application;
FIG. 16 is a schematic flowchart of another example data sharing method according to an embodiment of this application;
FIG. 17 is a schematic flowchart of still another example data sharing method according to an embodiment of this application;
FIG. 18 is a schematic flowchart of still another example data sharing method according to an embodiment of this application;
FIG. 19 is a schematic flowchart of still another example data sharing method according to an embodiment of this application; and
FIG. 20 is a schematic diagram of a structure of an example electronic device according to an embodiment of this application.

### DESCRIPTION OF EMBODIMENTS

The following describes technical solutions in embodiments of this application with reference to the accompanying drawings in the embodiments of this application. In the descriptions of embodiments of this application, unless otherwise specified, "/" represents "or". For example, A/B may represent A or B. In this specification, "and/or" is merely an association relationship for describing associated objects, and represents that three relationships may exist. For example, A and/or B may represent the following three cases: Only A exists, both A and B exist, and only B exists. In addition, in the descriptions of embodiments of this application, "a plurality of" refers to two or more.

The following terms "first", "second", and "third" are merely used for description, and cannot be understood as an indication or implication of relative importance or an implicit indication of a quantity of indicated technical features. Therefore, a feature defined with "first", "second", or "third" may explicitly or implicitly include one or more such features.

Referring to "one embodiment", "some embodiments", or the like that is described in this specification of this application means that specific features, structures, or characteristics described with reference to one or more embodiments are included in the one or more embodiments of this application. Therefore, statements such as "in one embodiment", "in some embodiments", and "in some other embodiments" that appear in different parts of this specification of this application do not necessarily refer to same embodiments, but mean "one or more but not all embodiments" unless otherwise specifically emphasized in another manner. The terms "include", "comprise", and "have", and variants thereof all mean "include but are not limited to", unless otherwise specially emphasized in other manners.

In order to better understand embodiments of this application, terms or concepts that may be involved in embodiments are explained and described below.

### 1. Application program, service, and atomic service

An application program is a complete entity unit that is loaded in a system of an electronic device and that is configured to provide a service for a user. The application program is provided by an application service provider. The application program may consist of several services to form a series of aggregated services. For example, the application program may include: camera, map, music, phone, notepad, and the like.

A service is described and defined from a service (or referred to as a function) perspective, and refers to a service capability unit in an operating system of an electronic device. A plurality of services may be combined based on a service scenario to form one or a series of intelligent services (for example, form an application program) of the electronic device. For example, services may include favorite, share, translate, and taxi hailing.

An atomic service is a basic service unit that constitutes an application program and cannot be decomposed any more, and is also a smallest unit for which an operating system can perform management and control and permission allocation. One atomic service can also be "shared" by a plurality of application programs.

In a word, services may be divided into an atomic service and a non-atomic service. The non-atomic service is, namely, a service unit that can be further decomposed. An application program may include several services. For example, the map application program may include a navigation service and a taxi hailing service. The notepad application program may include a note service, a to-do service, and the like. Certainly, a service may not be included in an application program, and is directly provided by a system of an electronic device, for example, a share service.

The electronic device may provide an entry of a series of services to a user by using an application program, or may provide an entry of one service to a user by using a service. For a side bar of an electronic device, an entry (icon) of an application program may be displayed in the side bar, and an entry (icon) of a service may be displayed in the side bar, so that a user enters a corresponding application program or service by using the entry.

### 2. Application

In embodiments of this application, an application program and a service may be collectively referred to as an "application". In other words, the application may be an application program, or may be a service.

### 3. Entity text

An entity text, also referred to as a named entity text, refers to a text corresponding to an entity that has a specific meaning or strong notation. In other words, the entity text refers to a text that belongs to a preset entity type. The entity text may include a person name, a place name, an organization, a date, a web address, a telephone number, and the like.

A process of recognizing an entity text is referred to as named entity recognition (named entity recognition, ner), and is also referred to as proper name recognition, which is a basic task in natural language processing. Named entity recognition is to extract an entity of a preset type from an unstructured input text. In addition, named entity recognition may also recognize more types of entities according to a service requirement, such as a product name, a model, and a price.

### 4. General text

A general text is a non-entity text.

### 5. Smart transfer and smart transfer service

In embodiments of this application, smart transfer refers to a process in which data (referred to as to-be-transmitted data) is shared from one application program with another application program or another service. To-be-transmitted data includes but is not limited to a text, a picture, a video, a document, a link, and the like.

The smart transfer service refers to matching an application program or a service (collectively referred to as a candidate application) that can receive to-be-transmitted data, and providing a service for a user to quickly forward the data to the candidate application.

Before the data sharing method provided in embodiments of this application is described in detail, an application scenario of the method is first described.

A large quantity of application programs are usually installed in electronic devices such as a mobile phone and a tablet computer, and can provide many services. In a use process, a user usually needs to copy content in a current interface to another APP or service for use, and therefore needs to switch between a plurality of application programs or services. For example, when an instant chat application program is in use, an address-related text in a current interface needs to be copied, then a map application program is opened, and the text is pasted in the map application program to search for the address for navigation. The process of copying content to another application program or service is relatively complex, and a user operation is relatively cumbersome. In addition, in an actual use process, there are even some interfaces on which a copy operation cannot be directly performed. In this scenario, if a user needs to apply content on the interface to another service or application, an operation is more cumbersome.

In view of this, an embodiment of this application provides a data sharing method. A user may trigger, by using a preset operation, an electronic device to extract and display an element of an interface, and trigger a smart transfer service in response to a related operation (such as long pressing and dragging) of the user on the extracted element, to determine one or more candidate applications that can receive the extracted element, and display an icon of the candidate application. When the user drags the extracted element to a region in which an icon of a candidate application is located and lifts the hand (also referred to as releasing), the electronic device shares the extracted element with the candidate application, so as to implement smart transfer. The foregoing process can quickly, conveniently, and smoothly implement data transmission across applications without needing a user to switch between a plurality of applications, thereby simplifying a user operation and improving user experience. In another aspect, according to the method provided in embodiments of this application, an electronic device may simultaneously extract a plurality of types of elements on an interface, so that a user selects a required element from the plurality of types of elements to perform a smart transfer service, and after interface extraction is performed for one time, the user may perform the smart transfer service for a plurality of times. The user does not need to repeatedly perform an operation to trigger interface extraction, thereby further simplifying a user operation and improving user experience.

The data sharing method provided in embodiments of this application may be applied to an electronic device on which an application program (application, APP) may be installed, such as a mobile phone, a tablet computer, a wearable device, an in-vehicle device, an augmented reality (augmented reality, AR)/virtual reality (virtual reality, VR) device, a notebook computer, an ultra-mobile personal computer (ultra-mobile personal computer, UMPC), a netbook, and a personal digital assistant (personal digital assistant, PDA). A specific type of the electronic device is not limited in embodiments of this application. A hardware structure, a software architecture, and the like of the electronic device are described in detail in subsequent embodiments.

The following describes in detail the data sharing method provided in embodiments of this application by using an example in which an electronic device is a mobile phone, with reference to the accompanying drawings and an application scenario.

According to the data sharing method provided in embodiments of this application, a user performs a preset operation to trigger the mobile phone to extract and display a plurality of preset types of elements (also referred to as content) on an interface. Optionally, during interface extraction, a preset region of a screen may be extracted. Optionally, content of a component of a preset type on the interface may be extracted according to an interface layout. For example, a content region on the interface may be extracted, and content in a window and a control may not be extracted. The content region refers to a component that is on the interface and that is used to display content of a main element. The window may include a status bar, a navigation bar, a toolbar, a label bar, an input box, a search bar (also referred to as a search box), and the like. In addition, a user portrait in the content region and a text input method interface may not be extracted.

Optionally, the plurality of preset types of elements may include but are not limited to a text element, a picture element, a video element, a file element, and a link element. The text element refers to text content on an interface. A format of the picture element may be JPG, PNG, or the like. A format of the video element may be MP4, AVI, WMV, or the like. A format of the file element is not limited. The link element refers to a link of another page on an interface, and may be a link of a page in any application. For example, the link element may be a web page link in a browser, a shopping link in a shopping application, an address link in a map application, or a conference link in a conference application. In addition, the link element may be a pure text link, may be an anchor text link or a hyperlink, or may be a picture link or the like.

After the element on the interface is extracted, the mobile phone displays the extracted element. In addition, a side bar may further be displayed on the interface, and the side bar includes an icon of a preset service or application program. A user may move the extracted element on the interface to a region in which an icon of a required service or application program is located by using an operation such as long pressing and dragging, to trigger a smart transfer service and share the extracted element with the service or application program. The region in which the icon is located refers to a preset region that includes the icon, that is, a region of the icon and a preset range around the icon. In embodiments of this application, sharing of data may include data transmission, data exchange, data sharing, and the like. The following embodiments are described by using data transmission as an example. In addition, in embodiments of this application, data (that is, to-be-transmitted data) transmitted during smart transfer is data corresponding to an element. Therefore, in the following embodiments, it may also be referred to as transmitting an element to another application program or service.

The following describes an implementation process of the data sharing method with reference to the accompanying drawings.

In embodiments of this application, at least three data sharing manners (the following Embodiment 1 to Embodiment 3) are provided according to different manners of triggering interface extraction, different manners of triggering a smart transfer service, different extracted elements, different manners of displaying an original interface, and the like. In a smart transfer service process, icons of candidate applications may be displayed in a side bar. In the following Embodiment 1 and Embodiment 2, the side bar and other content may be displayed in a form of "magic portal". For ease of understanding, the "magic portal" is first described.

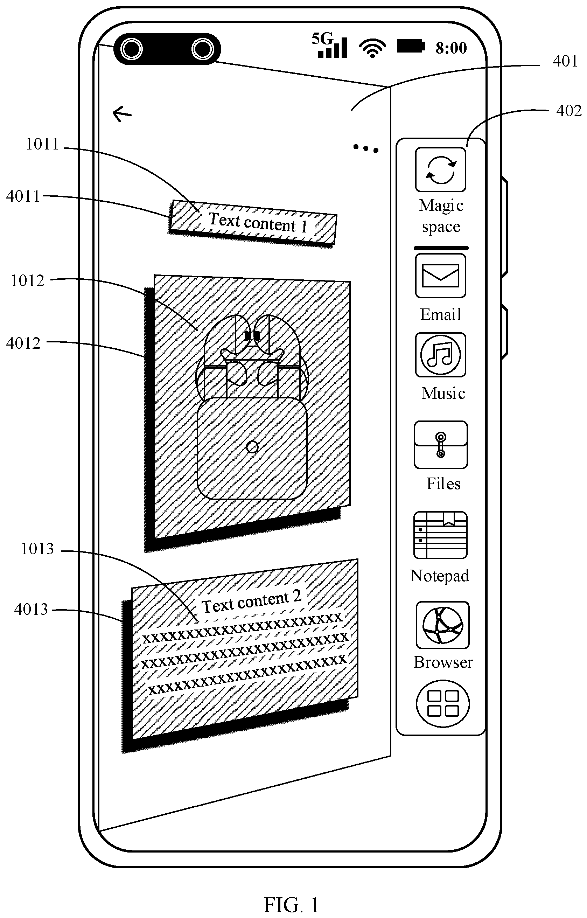

For example, FIG. 1 is a schematic diagram of an interface of an example "magic portal" according to an example of this application. As shown in FIG. 1, after an element on an interface is extracted, an original interface may be adjusted to a right perspective effect, and displayed as a sub-interface 401. The extracted element is also displayed at a top layer of the sub-interface 401 with a right perspective effect. In addition, a side bar 402 is displayed on a right side of the sub-interface 401 (that is, a right edge of a screen). A display effect presented by the sub-interface 401 and the side bar 402 is similar to an open door on the screen. In this embodiment of this application, an interface of the display effect is referred to as a "magic portal". In this embodiment of this application, a process of starting to display the "magic portal" on the screen may be referred to as opening the "magic portal", or referred to as "pushing the door".

Optionally, the mobile phone may further recognize and process the extracted element, analyze an element semantic, and perform group-based display for the element according to a semantic analysis result. Specifically, during group-based display, a principle followed may include but is not limited to: (1) Elements in a same group have a same type. For example, all elements included in a group are text elements, and all elements included in another group are picture elements. (2) For a picture element, a video element, a file element, a link element, and the like, one element is used as one group. For example, one picture is used as one group, a link corresponding to one page is used as one group, and one file is used as one group. (3) For a text element, grouping may be performed according to a semantic recognition result, a text paragraph, and the like. For example, texts of one or more semantics-consecutive paragraphs are used as one group.

Specifically, referring to FIG. 1, a text 1011 extracted from the interface may be divided into one group, a picture 1012 on the interface is divided into one group, and a text 1013 is divided into one group. Display is performed according to the grouping result. In this embodiment, extracted elements are displayed in groups, so that subsequently a user separately performs an operation on the elements in each group to trigger a smart transfer service, improving user operation experience.

Optionally, when the extracted elements are displayed in groups, elements of a same group may be displayed in a control in a form of a card, a bubble, a capsule, or the like. For example, in FIG. 1, the text 1011 is displayed in a card 4011, the picture 1012 is displayed in a card 4012, and the text 1013 is displayed in a card 4013. Optionally, shadows, padding (shown in the figure in this application by using pattern padding), and the like may be further set for these controls, so as to present a display effect of each group of elements floating on the interface, thereby further improving user experience. In this embodiment of this application, a display manner of an element or a control corresponding to an element is not limited. However, regardless of a display manner, after the extracted element or the control corresponding to the element is displayed on the interface, the user may perform a related operation on the element or the control corresponding to the element, for example, select, long press, and long press and drag.

In another possible implementation, after extracting elements from the interface and grouping them, the mobile phone may only display the original interface with a right perspective effect, and the original interface and the side bar form a "magic portal". The grouped elements can be displayed in a floating manner above the layer at which the "magic portal" interface is located (without presenting a right perspective effect).

Optionally, the mobile phone may directly display the grouped elements in a floating manner above the layer at which the "magic portal" interface is located, or may process the element before performing floating display. In a specific embodiment, the mobile phone may separately obtain key information in each group of elements according to each group of extracted elements, and display in a floating manner controls (for example, a card, a capsule, or a bubble) of each group of elements based on the key information. The control may be referred to as a visual control.

Specifically, for a link element, content in a corresponding page may be viewed according to the link, and a related picture or text in the page may be selected as key information to generate a visual control of this group of elements. For example, for a news link, a news webpage may be opened in a background according to the link, a title or picture in the news webpage is obtained, and the title or the picture is displayed in a control corresponding to the news link to generate a visual control. For a shopping link, a shopping webpage corresponding to the link may be opened in a background according to the link, a picture of a commodity in the shopping webpage is obtained as key information, and the picture is displayed in a control corresponding to the shopping link, to generate a visual control. For a file element, a file name and a file type of the file may be read, or content of the file is opened and read in a background, a title of the file or the like is obtained as key information, and the key information is displayed in a control corresponding to the file to generate a visual control. Optionally, these visual controls may be displayed in a floating manner above the layer at which the "magic portal" is located.

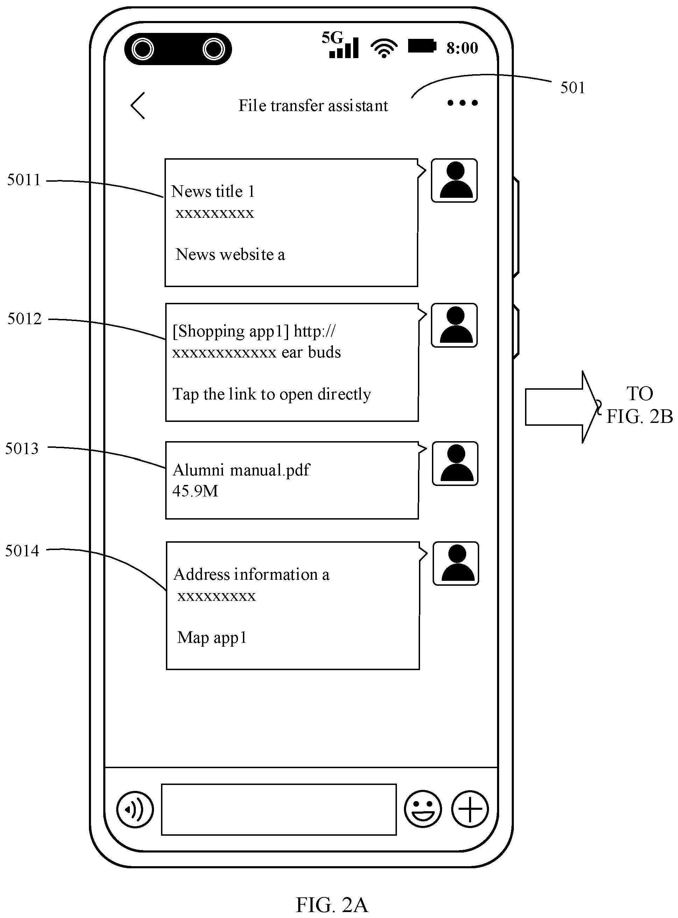

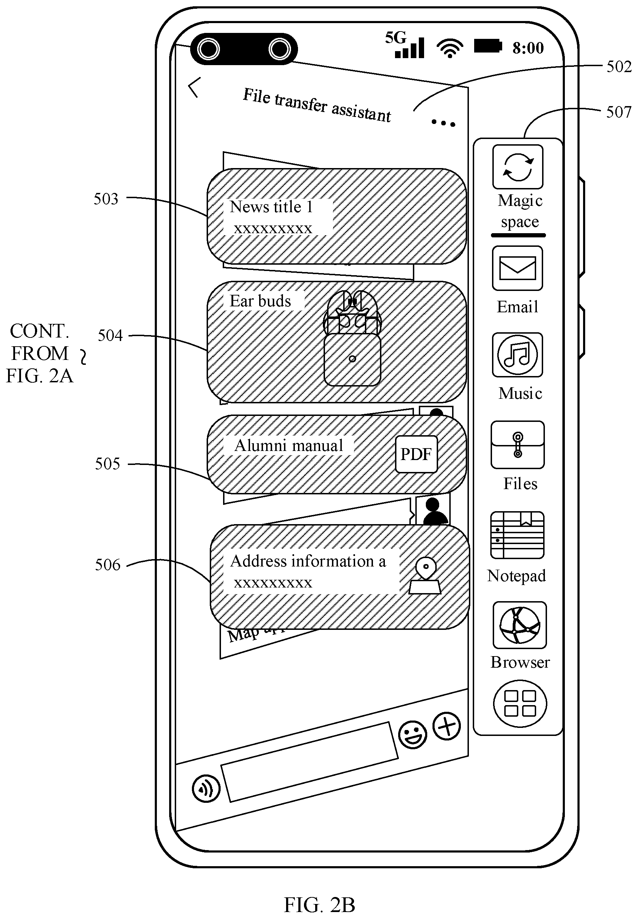

For example, FIG. 2A and FIG. 2B are a schematic diagram of an interface of another example "magic portal" according to an embodiment of this application. As shown in FIG. 2A, a chat interface 501 is displayed on a current screen of the mobile phone, and the interface 501 includes a news link 5011, a shopping link 5012, a file 5013, and an address link 5014. After extracting elements from the interface 101, the mobile phone may display the original interface (that is, the interface 101) with a right perspective effect, such as an interface 502 shown in FIG. 2B. Grouped elements are displayed in a form of a visual card. As shown in FIG. 2B, visual cards include a visual card 503, a visual card 504, a visual card 505, and a visual card 506. The visual card 503 is generated according to the news link 5011 in the original interface (that is, the interface 501), the visual card 504 is generated according to the shopping link 5012 in the original interface 501, the visual card 505 is generated according to the file 5013 in the original interface 501, and the visual card 506 is generated according to the address link 5014. The visual card 503, the visual card 504, the visual card 505, and the visual card 506 are displayed in a floating manner above the layer of the "magic portal". Optionally, shadows, padding (shown in the figure in this application by using pattern padding), and the like may be further set on each visual card, so as to present a display effect of each group of elements floating on an interface, thereby further improving user experience. This is not limited in this embodiment of this application. The side bar 807 includes icons of a plurality of application programs or services.

It should be noted that, in this implementation, the picture element, the text element, the video element, and the like may be directly displayed on the card.

In this implementation, key information of each group of elements is separately obtained according to extracted groups of elements, and a control of the element is displayed based on the key information. In this way, the user can intuitively learn of content corresponding to the element, so that the user selects a required element to perform a service operation, thereby improving user experience.

The following separately describes implementation processes of the three data sharing methods with reference to FIG. 1 and FIG. 2A and FIG. 2B.

Embodiment 1: A sideward sliding hover operation triggers interface extraction and opening of a "magic portal", so as to perform smart transfer.

The sideward sliding hover operation means that a sliding operation is performed inward from an edge on a left or right side of the screen, and stays at an end point position of the sliding operation for more than preset duration (that is, hover). A distance of the sliding operation exceeds a preset distance.

In this embodiment, the user performs a sideward sliding hover operation on the interface, which may trigger interface extraction and trigger opening of the "magic portal". When the "magic portal" is opened, the original interface and the extracted element may be displayed with a right perspective effect (as shown in FIG. 1 above), or only the original interface is displayed with a right perspective effect, and the extracted element is displayed in a floating manner in a form of a visual control above a layer at which the "magic portal" is located (as shown in FIG. 2A and FIG. 2B above). Then, the user long presses and drags an element to trigger the smart transfer service. The side bar displays a candidate icon that matches the element long pressed by the user. The user continues to drag the element to a region in which an icon of an application program or a service in the side bar is located and lifts the hand, so as to implement smart transfer, and transmit the element to the application program or the service. Optionally, after the element is transmitted to an icon of an application program or a service, the electronic device may further enable the application program or the service to display a corresponding interface. It should be noted that, in this embodiment of this application, when an operation is described, if it is not emphasized that the operation is a double-finger operation, a three-finger operation, or the like, the operation is a single-finger operation by default, and details are not described in the following.

First, with reference to an application scenario of "a picture in a favorites interface", the "magic portal" shown in FIG. 1 is used as an example to describe the data sharing method in this embodiment.

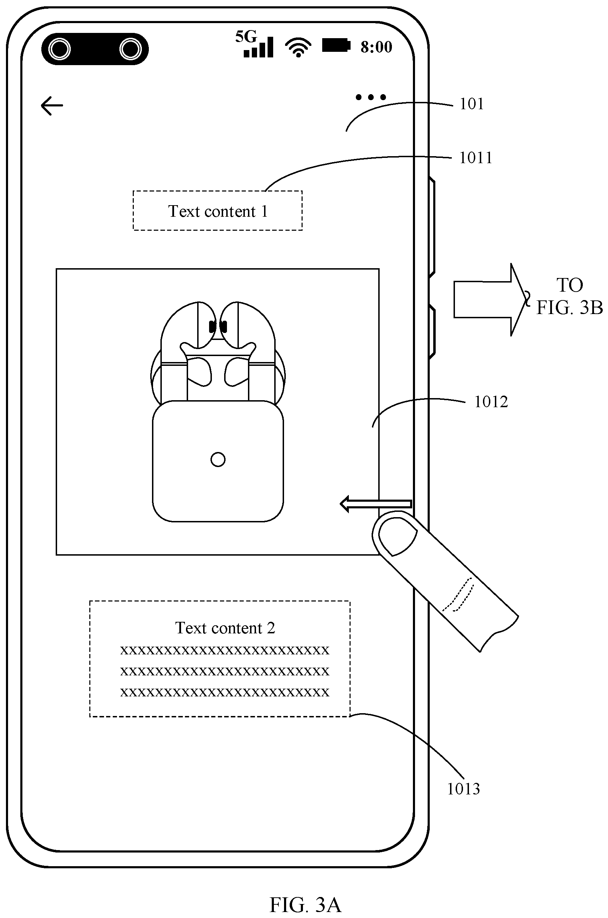

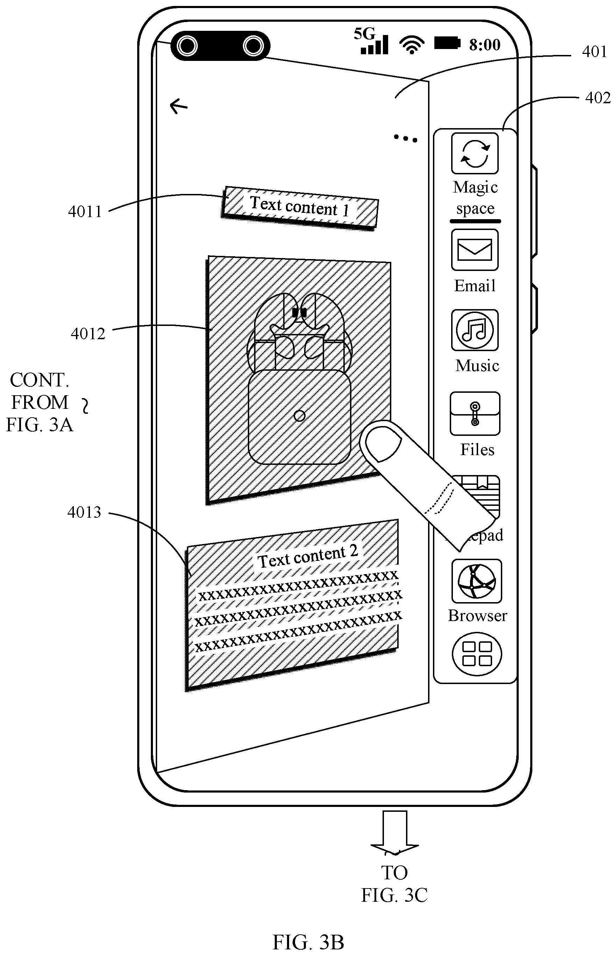

For example, FIG. 3A to FIG. 3E are a schematic diagram of an interface change of an example data sharing method according to an embodiment of this application. As shown in FIG. 3A, an interface 101 is displayed in a screen. The interface 101 includes a text 1011, a picture 1012, and a text 1013. The user performs a sideward sliding hover operation on the interface 101, and the mobile phone extracts elements on the interface 101 in response to the sideward sliding hover operation of the user, that is, extracts the text 1011, the picture 1012, and the text 1013. Then, the mobile phone groups the extracted elements, uses the text 1011 as one group, uses the picture 1012 as one group, and uses the text 1013 as one group. Then, the mobile phone opens the "magic portal" according to an element grouping result, and displays a sub-interface 401 and a side bar 402 shown in FIG. 3B.

The sub-interface 401 includes cards corresponding to each group of elements, such as a card 4011, a card 4012, and a card 4013. For details, refer to the embodiment shown in FIG. 1. Details are not described again. It should be noted that, in this case, an icon displayed in the side bar 402 is an icon of a default application program or service.

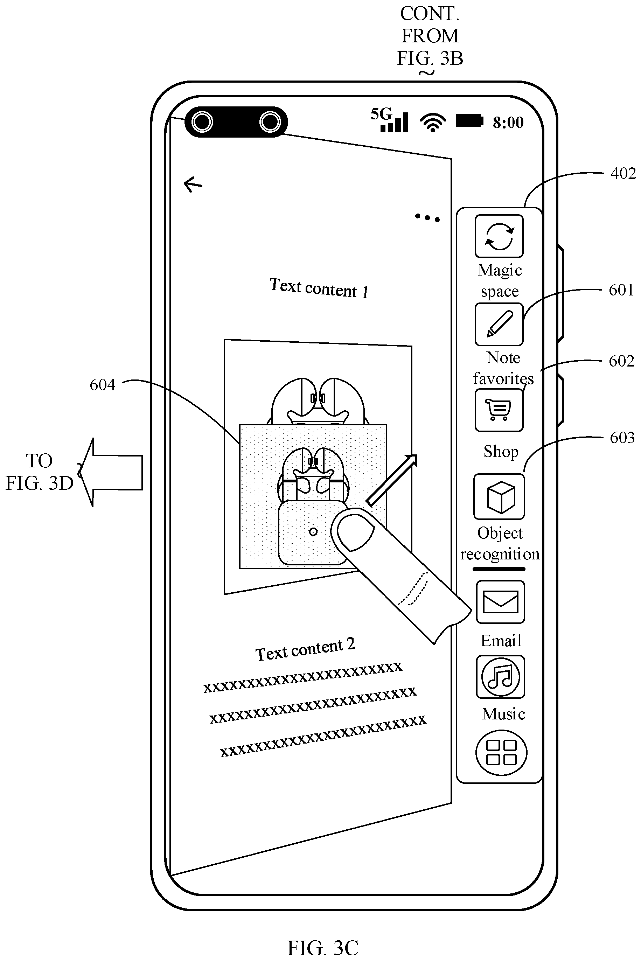

Then, the user long presses a card of a group of elements, and the mobile phone displays, in the side bar 402, an icon of an application program or a service that matches the group of elements according to a type of the element and semantics of the element in the card selected by the user. Specifically, that the user long presses the card 4013 is used as an example. As shown in FIG. 3C, in response to the long press operation of the user, the mobile phone determines that the element in the card selected by the user is a picture, and therefore an icon 601 of "note favorites", an icon 602 of "shopping", and an icon 603 of "object recognition" are displayed in the side bar 402. In addition, in response to the long press operation of the user, the card 4012 is scaled down to be displayed as a small card 604, other cards (that is, the card 4011 and the card 4013) disappear, and the original interface (that is, the interface 101) is displayed with a right view effect. Optionally, a padding or highlight effect may be set on the small card 604. FIG. 3C shows pattern padding.

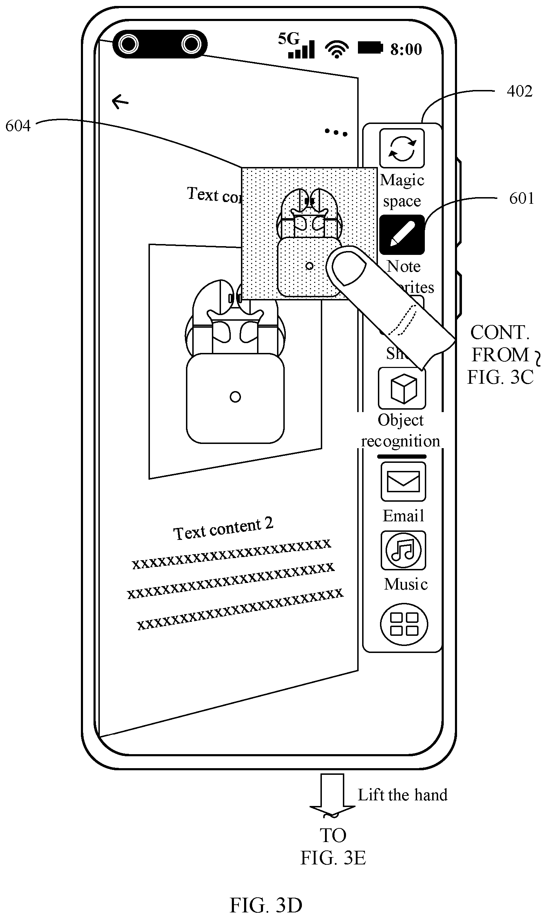

Then, the user moves the finger, and the small card 604 moves with the finger of the user, that is, the user drags the small card 604. In a drag process, when the small card 604 is close to an icon in the side bar 402, the icon may be highlighted, as shown in FIG. 3D.

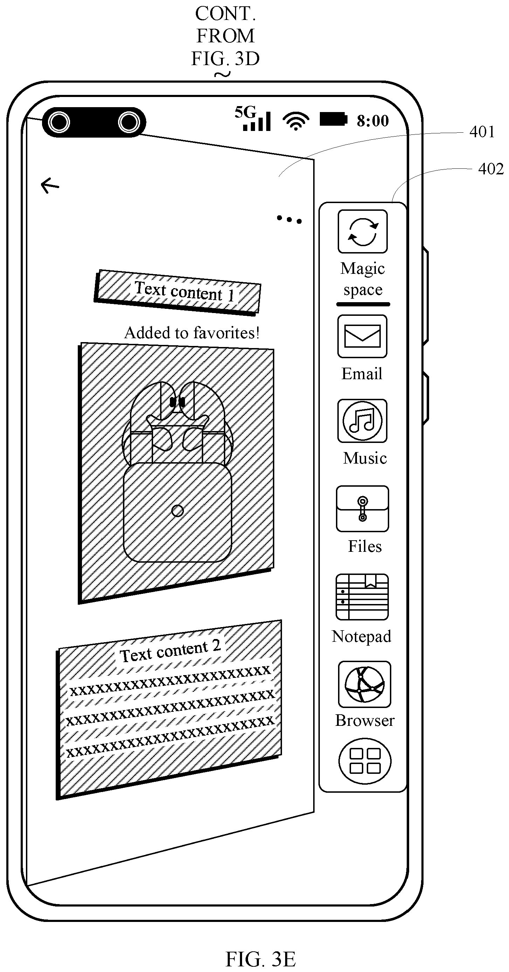

When the small card 604 is dragged to a region in which an icon of a service or an application program in the side bar 402 is located, the user lifts the hand, and the mobile phone transmits data (picture 1012) corresponding to the small card 604 to the service or the application program corresponding to the icon, where the service or the application program provides a related service according to the picture 1012. In an example in which the user drags the small card 604 to a region in which the icon 601 of "note favorites" is located and lifts the hand, in response to the operation of the user, the mobile phone sends to-be-transmitted data corresponding to the card 4012, that is, the picture 1012 to the note application program, and the note application program adds the picture 1012 to favorites. After adding to favorites is complete, relevant prompt information, such as "Added to favorites!", may be displayed on the interface to remind the user. In addition, the "magic portal" restores the state during interface extraction, that is, the original interface and the extracted element are displayed with a right perspective effect, and an icon of a default application program and service is displayed in the side bar, as shown in FIG. 3E.

It should be noted that, the finger of the user does not leave the screen between the long press operation shown in FIG. 3B and the drag operations shown in FIG. 3C and FIG. 3D, that is, the two operations are performed consecutively, and may be referred to as a long-press drag operation. Certainly, in some possible implementations, the long press operation and the drag operation may also be two discontinuous operations, that is, the user performs the long press operation and lifts the hand, and then performs the drag operation. This is not limited in this embodiment of this application.

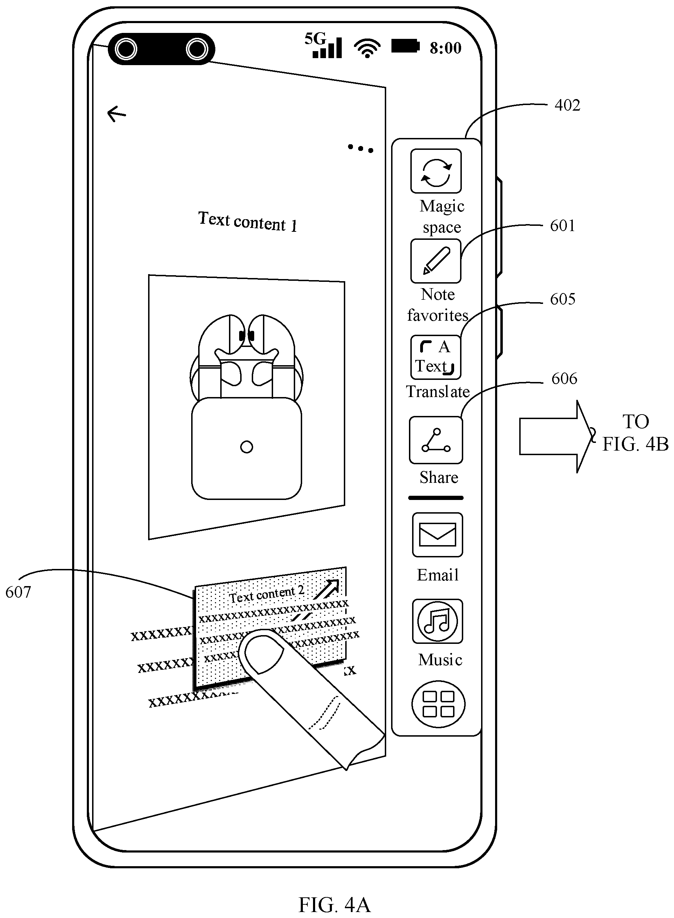

For example, FIG. 4A to FIG. 4D are a schematic diagram of an interface change of another example data sharing method according to an embodiment of this application. Continuing from FIG. 3E, after completing the smart transfer service once according to the process described in the foregoing embodiment, the user may continue to perform the smart transfer service. Specifically, the user may continue to trigger the smart transfer service by long pressing and dragging a card of a group of elements in the sub-interface 401. As shown in FIG. 4A, for example, the user long presses a card 4013. The mobile phone matches a candidate application that can receive to-be-transmitted data corresponding to the card 4013, and displays the icon 601 of "note favorites", the icon 605 of "translate", and the icon 606 of "share" in the side bar 402. In addition, in response to the long press operation of the user, the card 4013 is scaled down to be displayed as a small card 607, other cards (that is, the card 4011 and the card 4012) disappear, and the original interface (that is, the interface 101) is displayed with a right view effect.

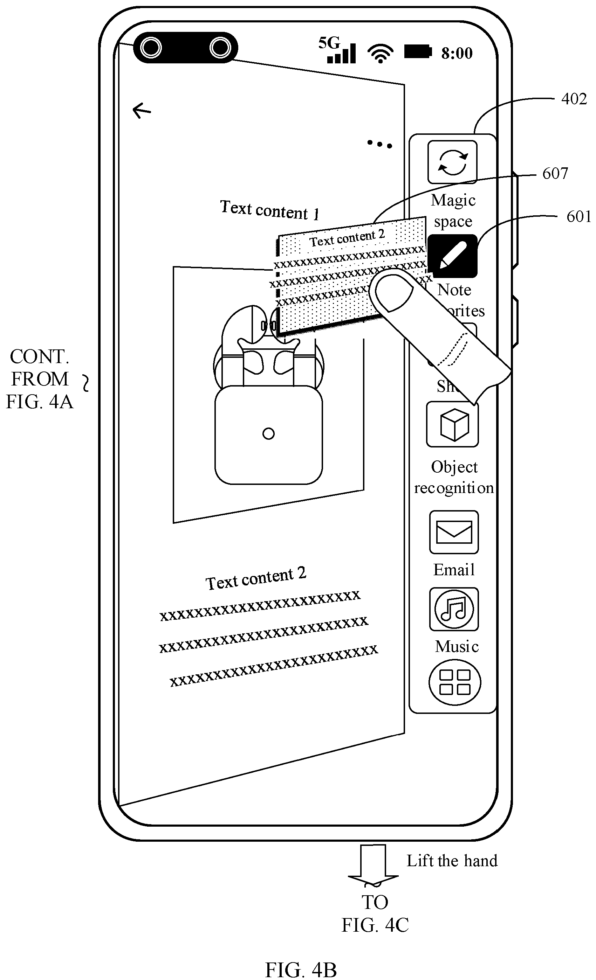

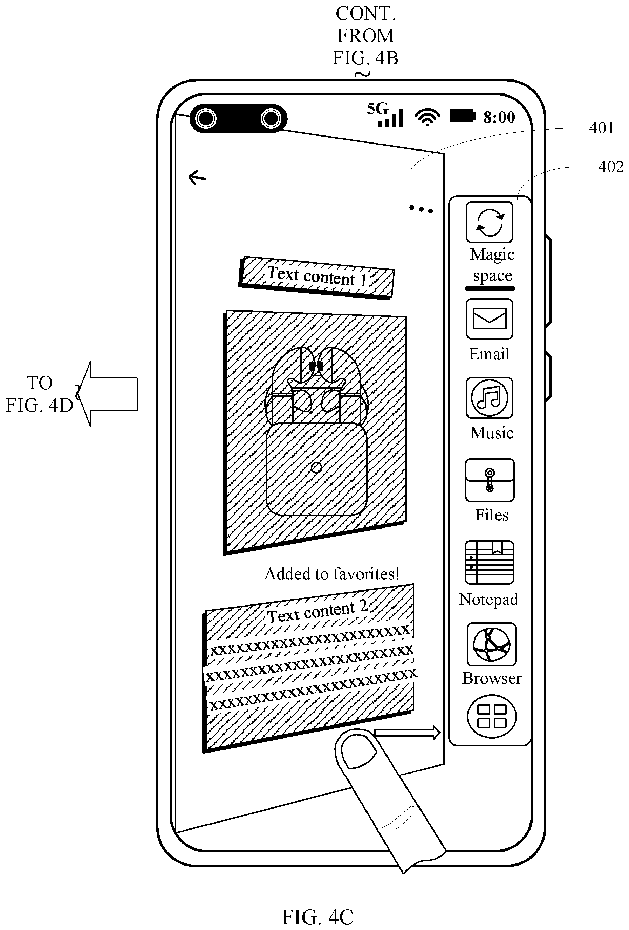

The user moves the finger, and the small card 607 moves with the finger of the user, that is, the user drags the small card 607. As shown in FIG. 4B, when the small card 607 is dragged to a region in which an icon of a service or an application program in the side bar 402 (using the icon 601 of "note favorites" as an example) is located, the user lifts the hand, the mobile phone sends to-be-transmitted data corresponding to the card 4013 to the note application program, and the note application program adds a text 1013 to favorites, and displays prompt information "Added to favorites!" on the interface. The "magic portal" restores the state during interface extraction, as shown in FIG. 4C.

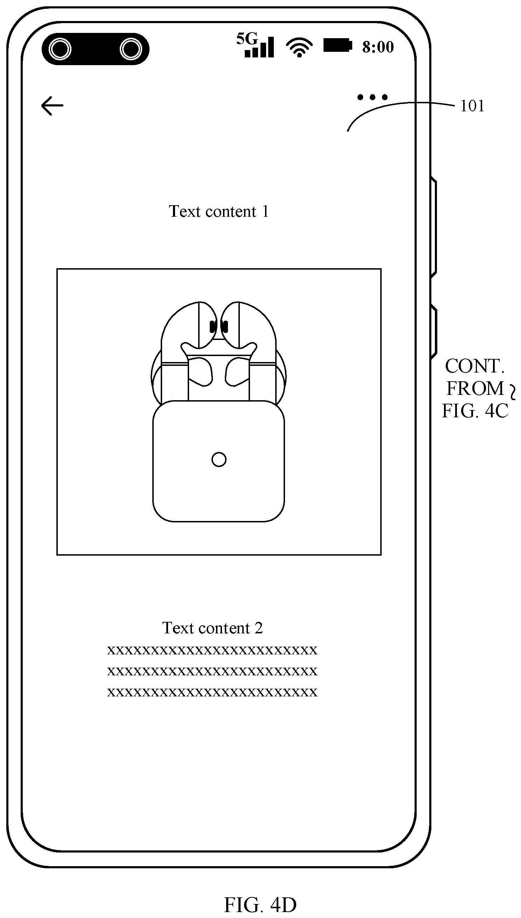

When the user does not need to perform the smart transfer service, the user may close the "magic portal" by tapping a blank position on the interface, or performing a rightward sliding operation, or the like. After the "magic portal" is closed, the interface is restored to the interface before extraction, that is, the interface 101 is displayed, as shown in FIG. 4D.

Optionally, in a possible implementation, the user may also select a plurality of elements at the same time and trigger the smart transfer service, so as to transmit data of the plurality of elements to another application program or service. For example, in the foregoing embodiment shown in FIG. 3A to FIG. 3E or FIG. 4A to FIG. 4D, the user may long press and drag the card 4012 and the card 4013 at the same time, and trigger smart transfer of the picture 1012 and the text 1013. In this way, a user operation is further simplified, and user experience is improved.

It may be understood that, in some other embodiments, when providing another service, the mobile phone may need to jump to an interface of another application program or service according to different elements or services selected by the user. In this case, the mobile phone may exit the "magic portal". When the user needs to extract the element on the interface next time, the user triggers interface extraction and the smart transfer service by using the foregoing process again.

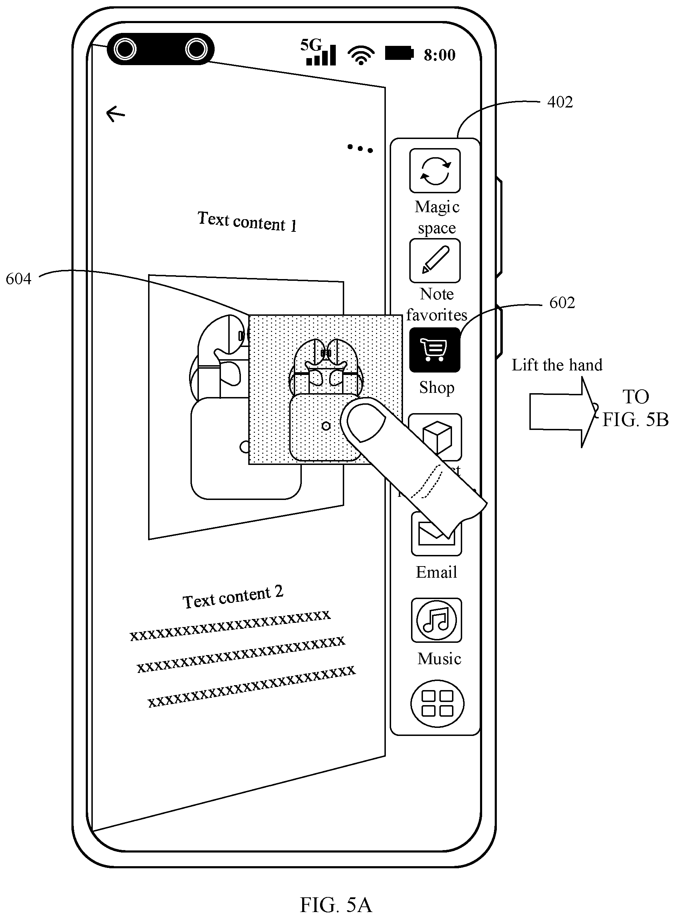

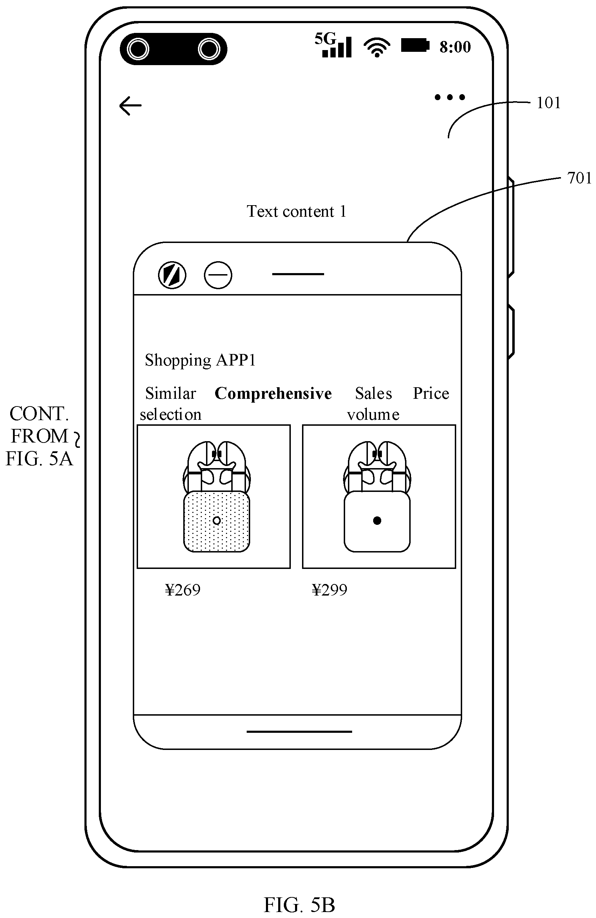

The following is described with reference to an application scenario of "image shopping". Referring to FIG. 5A and FIG. 5B, FIG. 3C is continued. As shown in FIG. 5A, when the user drags the small card 604 to the region in which the icon 602 of "shopping" is located and lifts the hand, in response to the operation of the user, the mobile phone transmits data (picture 1012) corresponding to the small card 604 to a preset shopping APP1, and the shopping APP1 searches for an article in the picture 1012, and displays a search result in a floating window 701. In this case, the mobile phone may exit the "magic portal" (that is, close the "magic portal"), and display the original interface 101 below a layer at which the floating window 701 is located, as shown in FIG. 5B. When the user needs to extract the element on the interface next time, the "magic portal" may be opened again by using the foregoing process.

In the data sharing method provided in this embodiment, a user only needs to use a sideward sliding hover operation to trigger interface extraction, and can trigger a smart transfer service by using a long-press drag operation, so as to implement cross-application data transmission without needing the user to switch between a plurality of applications, thereby simplifying a user operation and improving user experience. In addition, the mobile phone simultaneously extracts a plurality of elements on the interface, and simultaneously displays the plurality of elements to the user, so that the user selects any required element according to a requirement to perform the smart transfer service, thereby facilitating use and further improving user experience. In addition, after interface extraction is performed for one time, the user may perform the smart transfer service for a plurality of times, and the user does not need to repeatedly perform an operation to trigger interface extraction, thereby further simplifying a user operation and improving user experience.

The following further describes the data sharing method in this embodiment by using the "magic portal" shown in FIG. 2A and FIG. 2B as an example with reference to an application scenario of "transmitting an address link on an interface to a navigation service for navigation".

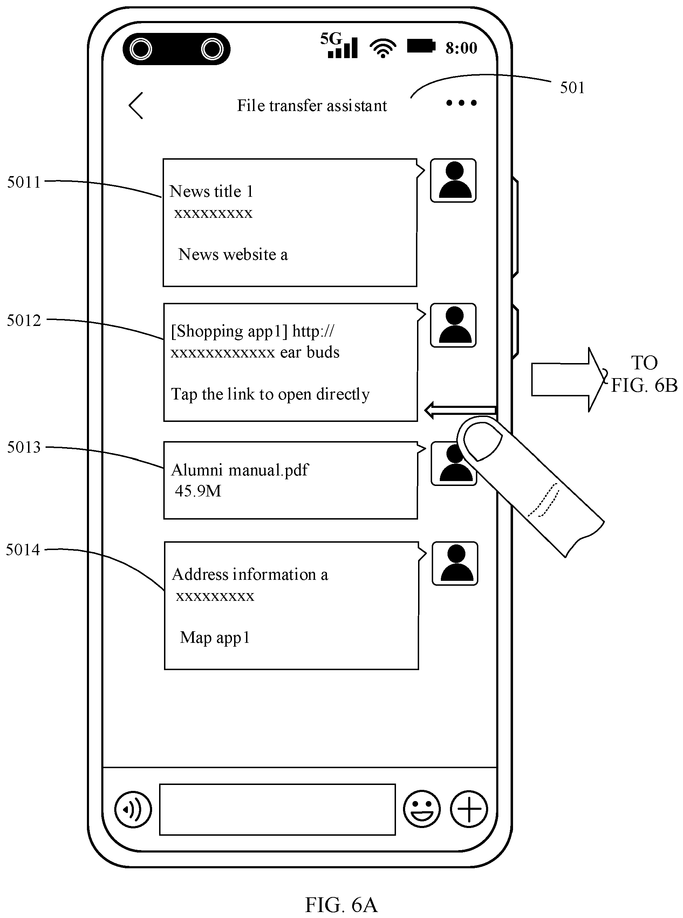

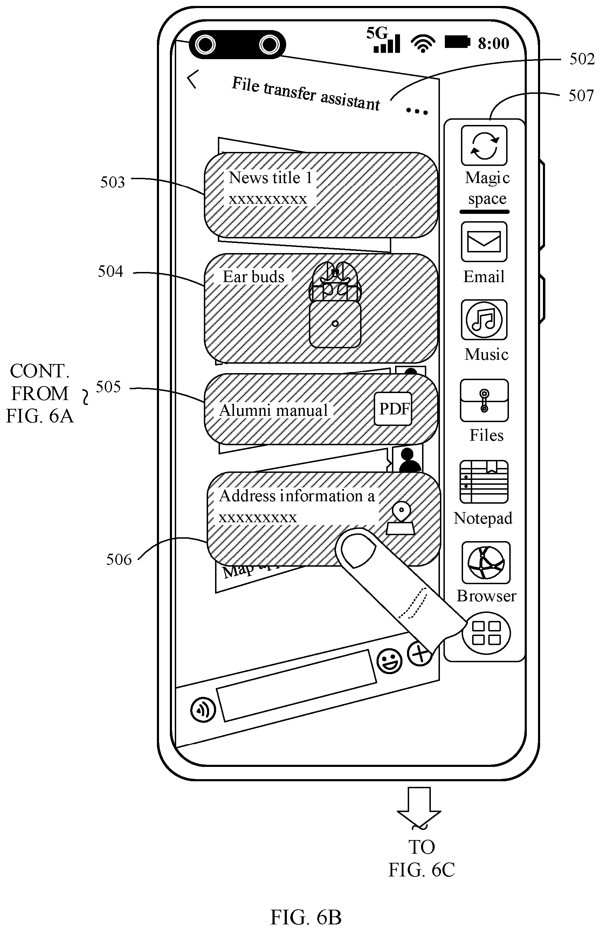

For example, FIG. 6A to FIG. 6F are a schematic diagram of an interface change of another example data sharing method according to an embodiment of this application. As shown in FIG. 6A, a chat interface 501 is displayed on a screen. The interface 501 includes a news link 5011, a shopping link 5012, a file 5013, and an address link 5014. The user performs a sideward sliding hover operation on the interface 501, and the mobile phone extracts elements on the interface 501 in response to the sideward sliding hover operation of the user, that is, extracts the news link 5011, the shopping link 5012, the file 5013, and the address link 5014. Then, the mobile phone groups the extracted elements, uses the extracted news link 5011 as one group, uses the shopping link 5012 as one group, uses the file 5013 as one group, and uses the address link 5014 as one group. In addition, the mobile phone separately extracts key information according to the news link 5011, the shopping link 5012, the file 5013, and the address link 5014. Then, the mobile phone generates visual cards according to the key information, and opens the "magic portal". The original interface (that is, the interface 501) is displayed as a sub-interface 502 with a right view effect, as shown in FIG. 6B. The visual cards include a visual card 503, a visual card 504, a visual card 505, and a visual card 506. For details, reference may be made to the embodiment shown in FIG. 2A and FIG. 2B, and details are not described again.

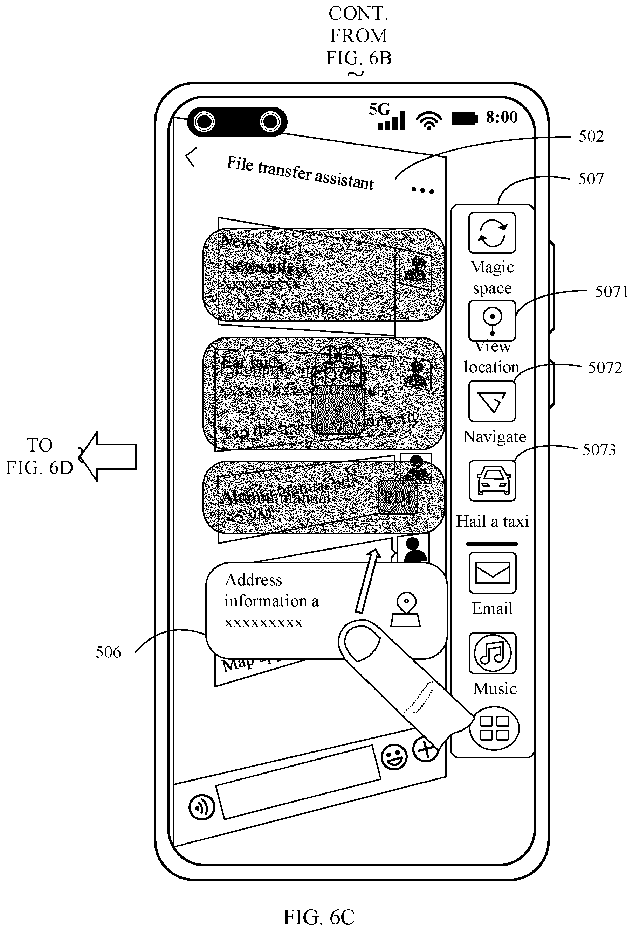

Then, the user long presses a visual card, and a side bar 507 displays an icon of an application program or a service that matches an element corresponding to the visual card. Specifically, for example, the user long presses the visual card 506. As shown in FIG. 6C, in response to the long press operation of the user, the side bar 507 displays an icon 5071 of "view location", an icon 5072 of "navigate", and an icon 5073 of "hail a taxi". In addition, in response to the long press operation of the user, the visual card 506 is highlighted, and the other cards are displayed in a semi-transparent manner. It may be understood that the foregoing "highlighted" and "displayed in a semi-transparent manner" are merely examples of implementation, and are not used to limit a specific display manner.

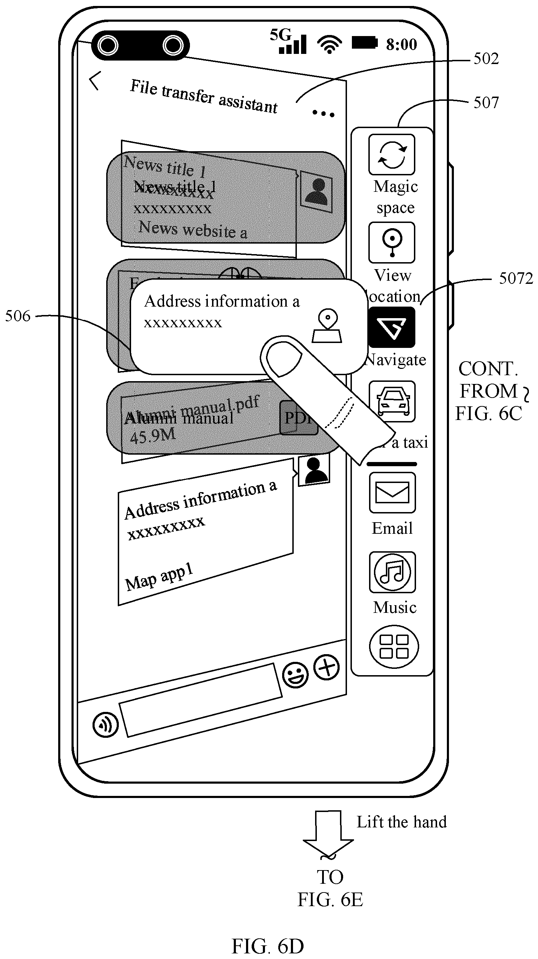

Then, when the finger of the user moves, the highlighted visual card 506 moves with the finger of the user, that is, the user drags the highlighted visual card 506. In a drag process, when the small card 604 is close to an icon in the side bar 507, the icon may be highlighted, as shown in FIG. 6D.

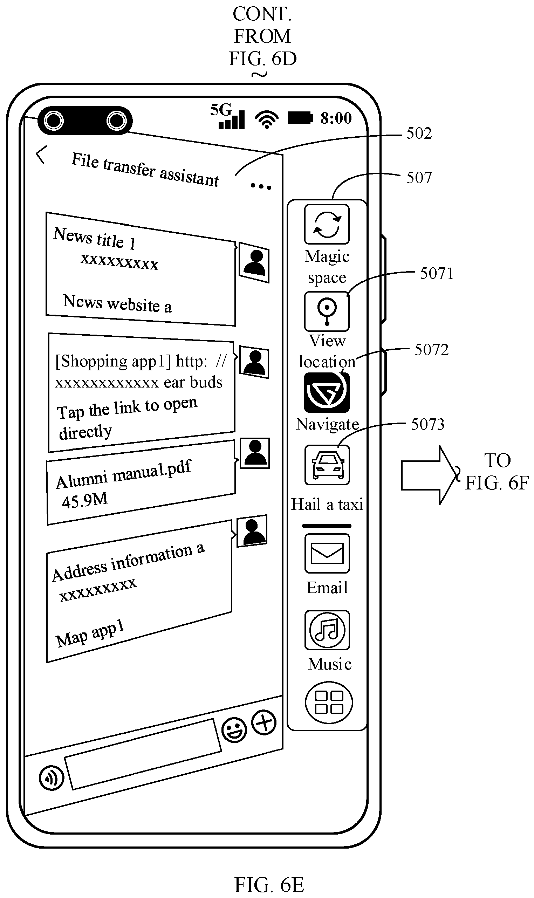

When the user drags the highlighted visual card 506 to a region in which an icon of a service or an application program in the side bar 507 is located, the user lifts the hand, the mobile phone transmits data (address link 5014) corresponding to the highlighted visual card 506 to the service or the application program, and the service or the application program provides a related service according to the address link 5014. For example, the user drags the highlighted visual card 506 to a region in which the icon 5072 of "navigate" is located and lifts the hand. In response to the operation of the user, the mobile phone transmits the address link 5014 to the navigation service and enables the navigation service, and all the visual cards disappear, as shown in FIG. 6E. In addition, in a process of enabling the navigation service, the icon 5072 of "navigate" in the side bar 507 may display an enabling progress, as shown in FIG. 6E.

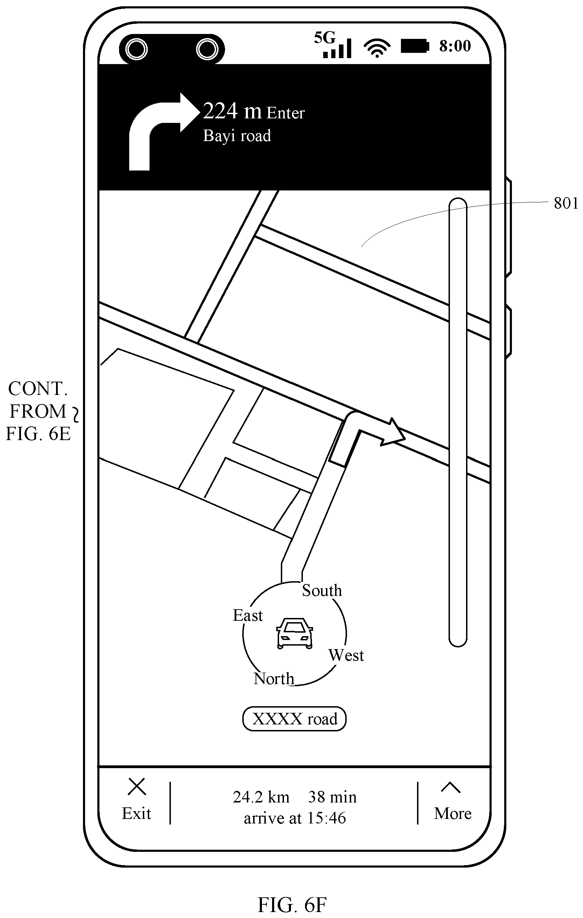

After the navigation service is enabled, an address (address information a) in the address link 5014 is used as a navigation destination for navigation, and a navigation interface 801 is displayed, as shown in FIG. 6F.

As in the foregoing embodiment, in this embodiment of this application, the smart transfer service may be triggered at the same time for a plurality of elements, and after the smart transfer service is completed for the first time, the smart transfer service may be continuously performed for the second time and the third time. This is not described in this embodiment.

In the foregoing FIG. 3A to FIG. 6F, the data sharing method provided in the embodiment of this application is separately described by using several application scenarios such as "picture in a favorites interface", "image shopping", and "transmitting an address link on an interface to a navigation service for navigation". It should be noted that in the method provided in the embodiment, in another application scenario, another element-related service may be implemented by using a sideward sliding hover operation and a long-press drag operation, and the foregoing beneficial effects may also be achieved. Details are not described herein again.

Embodiment 2: A preset gesture triggers interface extraction and drags an element to a preset position range to trigger opening of a "magic portal", so as to perform smart transfer.

In this embodiment, a user may trigger, by using a preset gesture, a mobile phone to perform interface extraction. After interface extraction, the mobile phone displays an extracted element. Then, the user selects an element and drags the element to a preset position range of a screen to trigger opening of the "magic portal" and trigger a smart transfer service, and a side bar displays an icon of a candidate application that matches the element selected by the user. Then, the user may continue to perform a drag operation, drag the selected element to a region in which an icon of an application program or a service in the side bar is located and lift the hand, so as to trigger smart transfer. The preset position range of the screen may be designed according to an actual requirement, for example, may be a preset region on a side edge of the screen, such as the right or left 1/3 of the screen, or the left or right 1/4 of the screen.

Optionally, the preset gesture may be one of double-finger long press, three-finger leftward sliding, three-finger rightward sliding, knuckle upward sliding, knuckle leftward sliding, or knuckle rightward sliding. In the following embodiment, the double-finger long press gesture is used as an example for description.

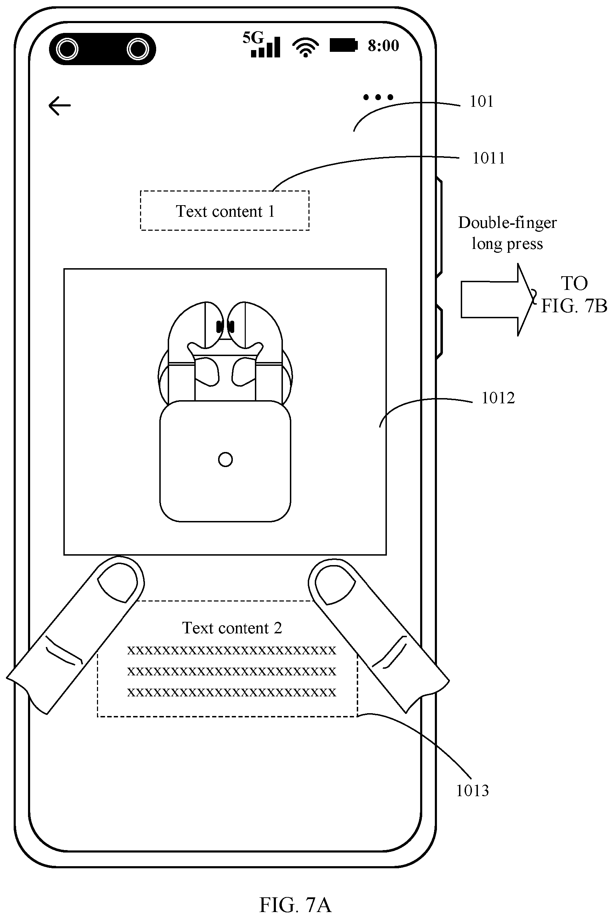

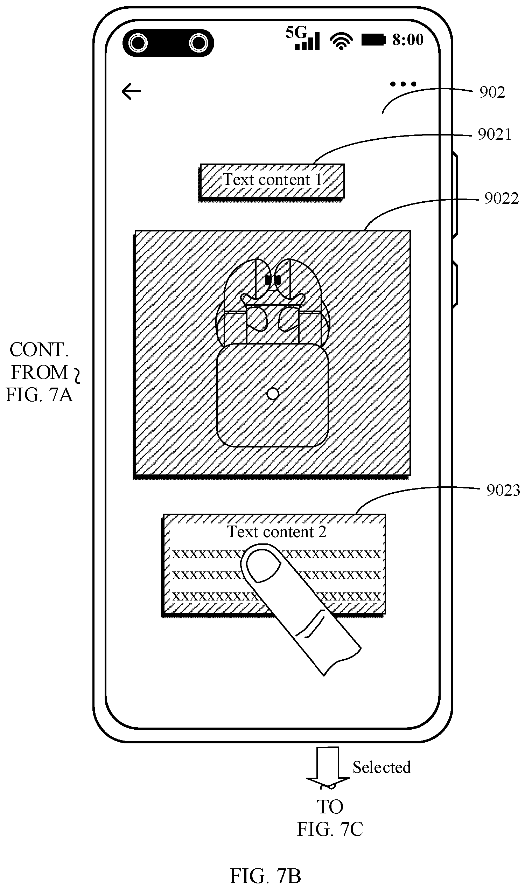

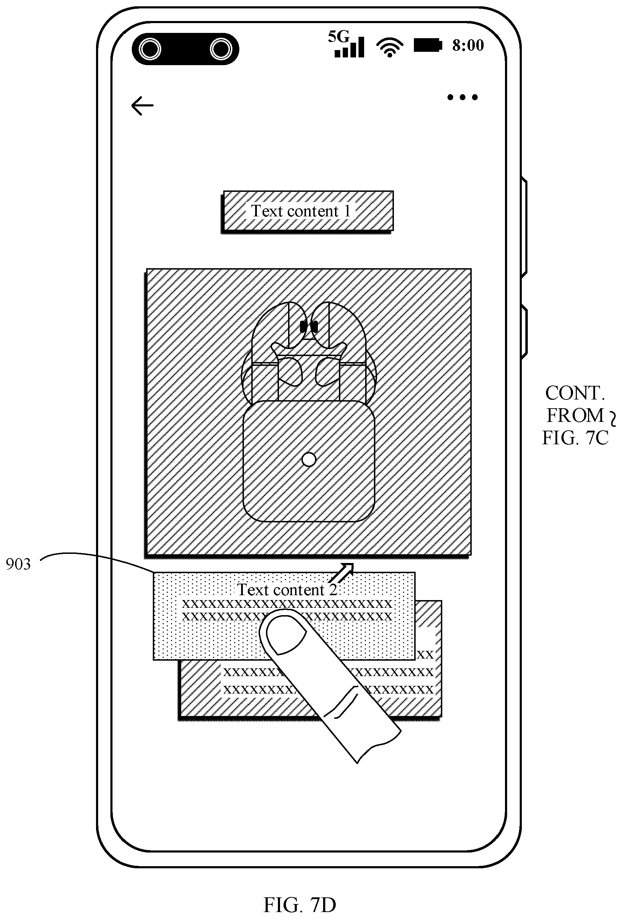

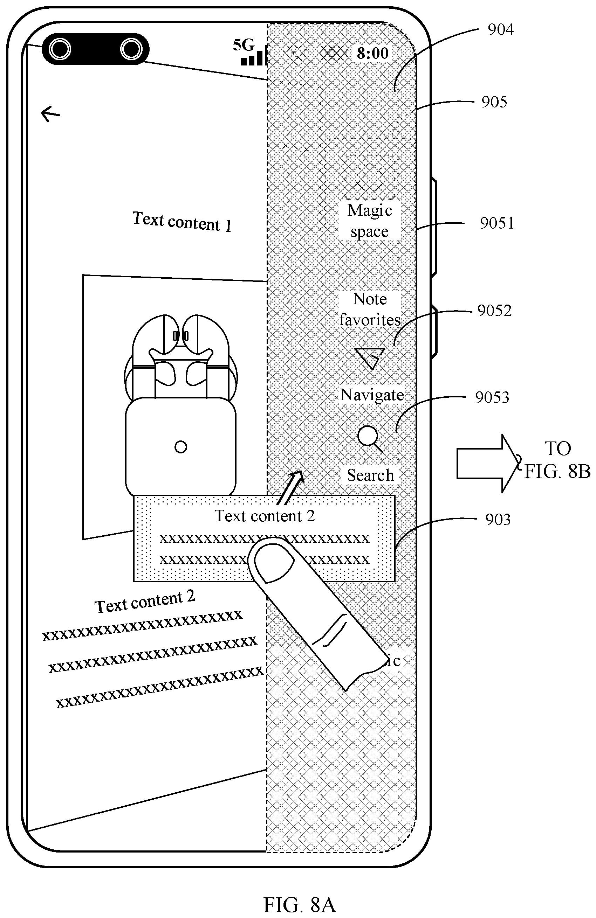

For example, FIG. 7A to FIG. 7D and FIG. 8A to FIG. 8D are schematic diagrams of interface changes of still another data sharing method according to an embodiment of this application, where FIG. 8A continues from FIG. 7D. As shown in FIG. 7A, an interface 101 is displayed in a screen. The interface 101 includes a text 1011, a picture 1012, and a text 1013. The user performs a double-finger long press operation on the interface 101, and the mobile phone extracts elements on the interface 101 in response to the double-finger long press operation of the user, that is, extracts the text 1011, the picture 1012, and the text 1013. Then, the mobile phone groups the extracted elements, uses the text 1011 as one group, uses the picture 1012 as one group, and uses the text 1013 as one group. Then, the mobile phone displays the extracted elements according to grouping of the elements, for example, an interface 902 shown in FIG. 7B.

On the interface 902, the groups are respectively presented as a card 9021, a card 9022, and a card 9023. Shadows and padding may also be set on the card 9021, the card 9022, and the card 9023 to present a display effect of each group of elements floating on the interface, which is similar to the sub-interface 401 in FIG. 1. Different from the sub-interface 401 in FIG. 1, the sub-interface 401 is displayed with a right view effect, and the interface 902 in FIG. 7A to FIG. 7D is not displayed with a right view effect. Certainly, each card on the interface 902 may also be set to another display form as required. This is not limited in this embodiment of this application.

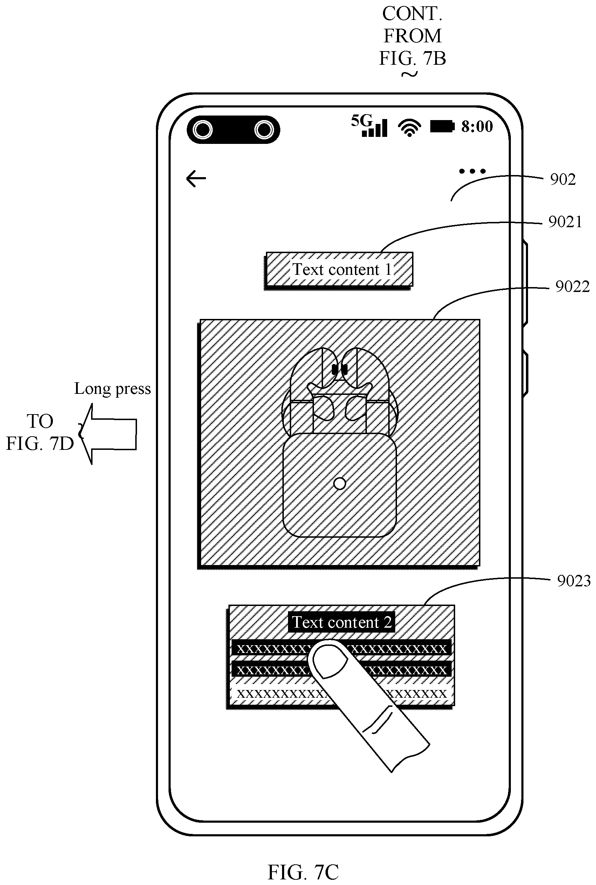

The user performs a selection operation on some or all of a group of elements on the interface 902, and the selected element may be highlighted. For example, if the user selects some texts in the card 9023 from the interface 902, these texts are highlighted, as shown in FIG. 7C. Optionally, the selection operation may be set according to an actual requirement. For example, a selection operation on a picture element may be a long press operation, and a selection operation on a text element may include one or more of a long press operation, a drag operation, a paint operation, or a knuckle screenshot operation.

Then, the user performs a long press operation in any position in the selected text. A card 903 is displayed on the interface, and the card 903 includes content selected by the user, as shown in FIG. 7D. Optionally, the card 903 may be displayed in a floating manner above a layer at which the interface 902 is located, and highlighted (shown in the figure as pattern padding). In addition, when the card 903 is displayed on the interface, the text in the card 9023 may be unhighlighted, as shown in FIG. 7D.

Then, the user may move the finger, and the card 903 moves with the finger of the user, that is, the user may drag the card 903. When the finger of the user enters a preset region 904 on the side edge of the screen, a "magic portal" is triggered to open. Specifically, the original interface (that is, the interface 101) is displayed with a right view effect, and a side bar 905 is displayed on the side edge of the screen, as shown in FIG. 8A. The side bar 905 displays an icon of a service or an application program that matches an element selected by the user. For example, as shown in FIG. 8A, the side bar 905 may display an icon 9051 of a "note favorites" service that matches a text 1013, an icon 9052 of a "navigate" service, and an icon 9053 of a "search" service.

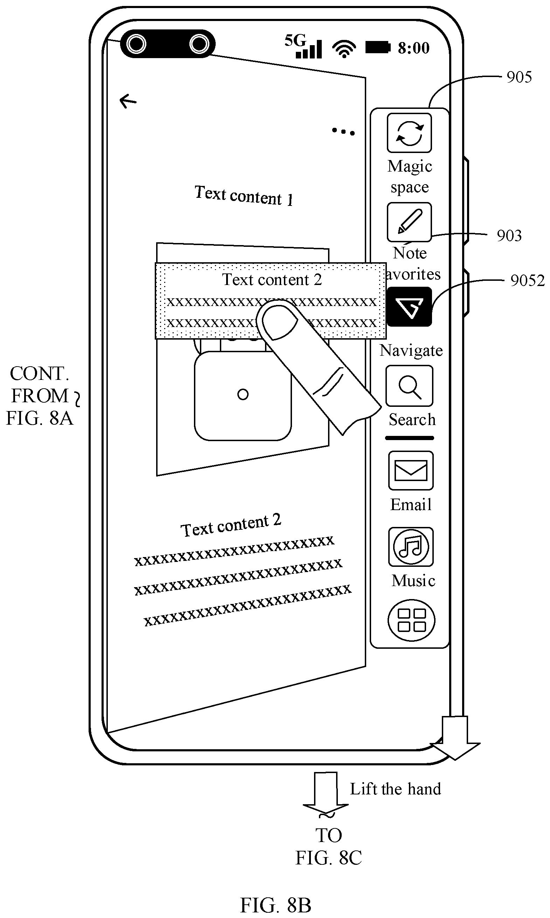

Then, the user continues to drag the card 903. As in the foregoing embodiment, in a drag process, when the card 903 is close to an icon in the side bar 905, the icon may be highlighted, as shown in FIG. 8B.

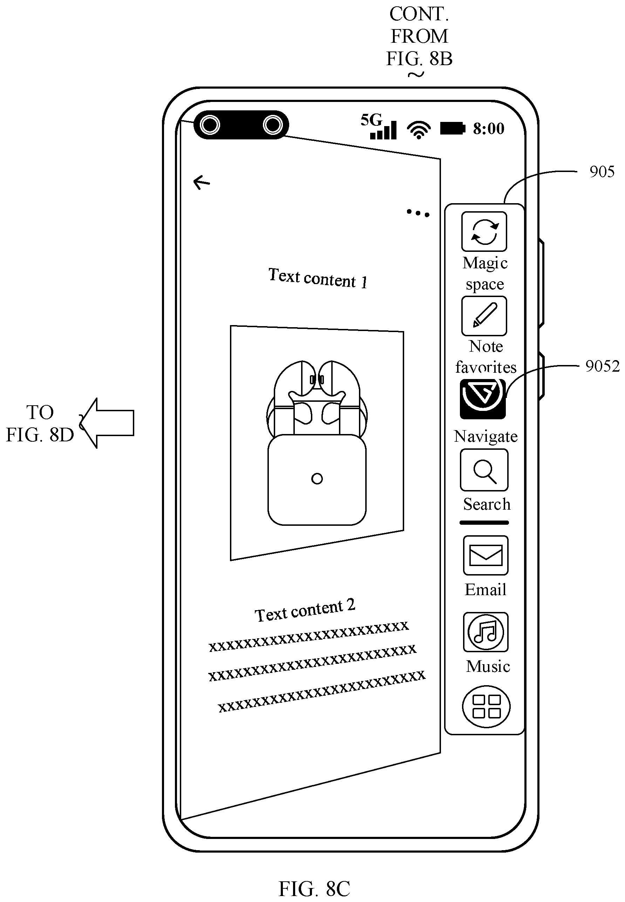

When the user drags the card 903 to a region in which an icon of an application program or a service in the side bar 905 is located and lifts the hand, the mobile phone transmits data (text 1013) corresponding to the card 903 to the application program or the service, and the application program or the service provides a related service according to the text 1013. For example, the user drags the card 903 to a region in which the icon 9052 of the "navigate" service in the side bar 905 is located and lifts the hand. As shown in FIG. 8C, in response to the operation of the user, the mobile phone transmits the text 1013 to the navigation service and enables the navigation service, and the card 903 disappears. As in the foregoing embodiment, in a process of enabling the navigation service, the icon 9053 of "navigate" in the side bar 905 may display an enabling progress, as shown in FIG. 8C.

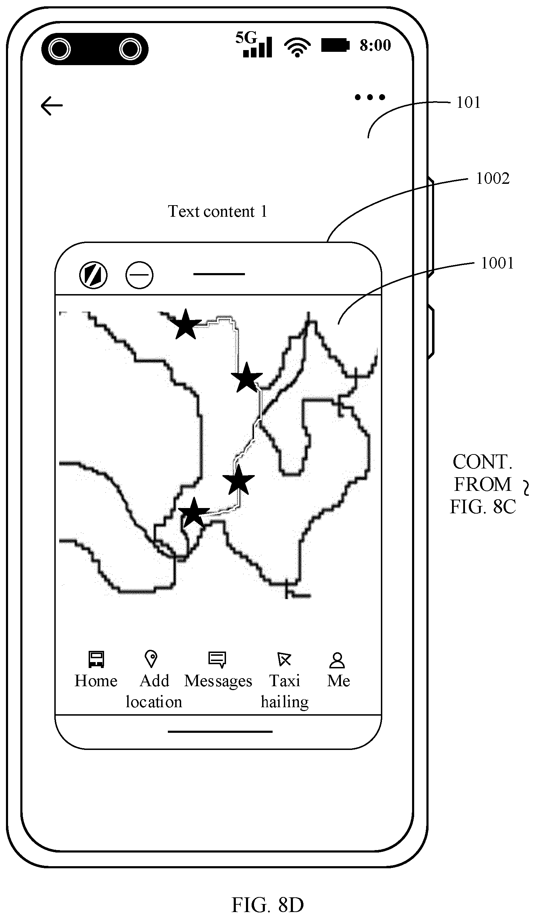

Optionally, after the navigation service is enabled, a navigation route is generated according to content selected by the user in the text 1013, and a navigation interface is displayed. Specifically, the navigation service may perform entity recognition on the content selected by the user in the text 1013, recognize an address in the content, and generate a navigation route according to the recognized address. In a specific embodiment, when the text 1013 includes a plurality of addresses, the navigation service may separately use the plurality of addresses as destinations or waypoints in the navigation route to generate the navigation route, and display a navigation interface 1001, as shown in FIG. 8D. That is, the navigation service serializes the plurality of addresses to generate the navigation route. Optionally, the navigation interface may be displayed in a floating window 1002. In addition, after the floating window 1002 is displayed, the mobile phone may exit the "magic portal" (that is, close the "magic portal"), and the original interface 101 is displayed below a layer at which the floating window 1002 is located, as shown in FIG. 8D. When the user needs to extract the element on the interface next time, the "magic portal" may be opened again by using the foregoing process.

Optionally, after the user closes the floating window 1002, the mobile phone may restore display of the interface 902. In this way, the user may continue to perform, based on the interface 902, an operation related to smart transfer. For example, after restoring display of the interface 902, the user may further long press the card 9022 on the interface 902. In response to the operation of the user, a card that includes content of a picture 1012 is displayed on the interface, the user moves the finger, and the card moves with the finger of the user, that is, the user drags the card. When the finger of the user enters a preset region 904 on a side edge of the screen, the "magic portal" is triggered to open, and an icon of a service or an application program related to the picture 1012 is displayed in the side bar, for example, an icon of "note favorites", an icon of "shop", and an icon of "object recognition". When the user drags the card to a region in which an icon of an application program or a service in the side bar is located and lifts the hand, the mobile phone transmits data (picture 1012) corresponding to the card to the application program or the service. The application program or the service provides a related service according to the picture 1012, and implements the smart transfer service again. That is, after the mobile phone performs interface extraction once, the user may perform the smart transfer service for a plurality of times, and the user does not need to repeatedly perform an operation to trigger interface extraction, thereby further simplifying a user operation and improving user experience.

In another possible implementation, when the floating window 1002 is displayed, the interface 902 including the extracted element may be displayed below the layer at which the floating window 1002 is located. In this way, after closing the floating window 1002, the user directly drags an element or several elements on the interface 902 to a preset region of the screen, triggers the "magic portal" to open, and triggers the smart transfer service. In this way, based on one-time interface extraction, the user can implement a plurality of times of smart transfer, and the user does not need to repeatedly perform an operation to trigger interface extraction, thereby further simplifying a user operation and improving user experience.

In another possible implementation, when the floating window 1002 is displayed, the mobile phone may not exit the "magic portal", but displays the extracted element on a sub-interface that is displayed with a right perspective effect in the "magic portal". In this way, after the floating window 1002 is closed, the user may directly drag, on the sub-interface with the right perspective effect, an element or several elements to an icon in the side bar, so as to trigger smart transfer again. In this way, based on one-time interface extraction, the user can implement a plurality of times of smart transfer, and the user does not need to repeatedly perform an operation to trigger interface extraction, thereby further simplifying a user operation and improving user experience.

The data sharing method provided in the embodiment may be applied to many actual application scenarios. For example, when a user is viewing a travel guide, the user wants to query a navigation route based on an address provided in a text of the travel guide. In this case, by using the method provided in the embodiment, a navigation service can be obtained simply and quickly, without needing to select addresses one by one from a lengthy text, and then input the addresses into a navigation application one by one, thereby greatly simplifying a user operation and improving user experience. In addition, when the user views an interface, for some interfaces on which content cannot be directly copied, by using the method provided in the embodiment of this application, an element on the interface can be quickly extracted, and an element-related service is provided, thereby improving user experience.

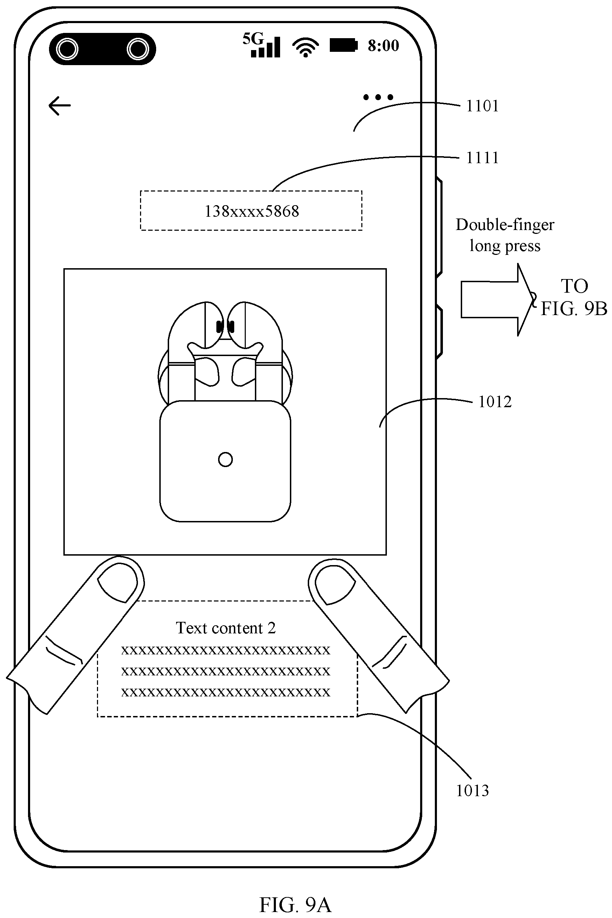

In a possible implementation, the service of the "magic portal" may further be combined with an entity recognition function, so as to provide more intelligent experience for the user. Specifically, after interface extraction, entity recognition may be performed on an extracted text element to extract an entity text in the text element. The entity text may be displayed differently from a general text, and different operation manners may exist for the entity text and the general text. Specifically, in a possible implementation, a selection operation does not need to be performed on the entity text. Long press directly triggers display of a highlighted card in a floating manner. By dragging the card to a preset region, the magic portal is triggered to open. For details, refer to FIG. 9A to FIG. 9E.

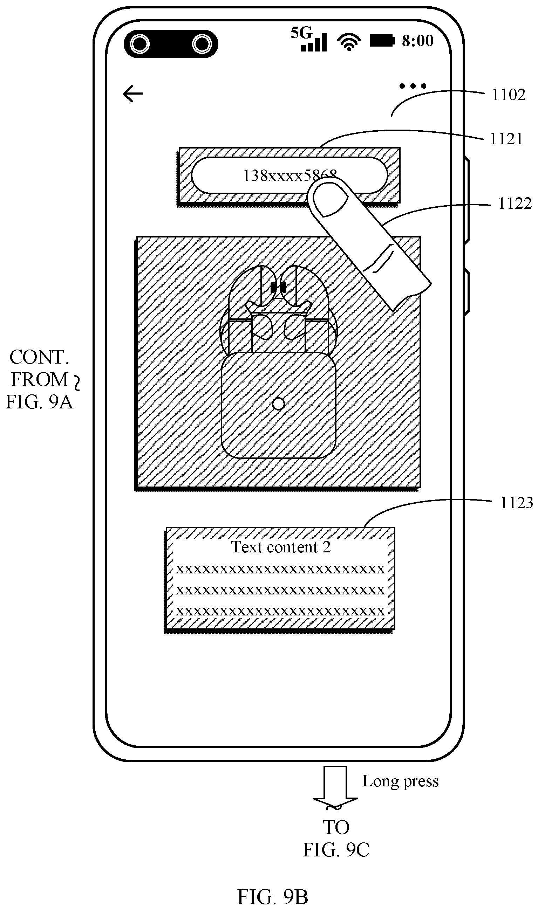

For example, FIG. 9A to FIG. 9E are a schematic diagram of an interface change of still another example data sharing method according to an embodiment of this application. As shown in FIG. 9A, an interface 1101 is displayed in a screen. The interface 1101 includes a text 1111, a picture 1012, and a text 1013, where the text 1111 is a telephone number. The user performs a double-finger long press operation on the interface 1101, and the mobile phone extracts elements on the interface 1101 in response to the double-finger long press operation of the user, that is, extracts the text 1111, the picture 1012, and the text 1013. Then, the mobile phone performs entity recognition on the extracted elements to recognize an entity text in a text element. Then, the mobile phone groups the extracted elements, uses the text 1111 as one group, uses the picture 1012 as one group, and uses the text 1013 as one group. The mobile phone displays the extracted elements according to grouping of the elements and an entity recognition result, for example, an interface 1102 shown in FIG. 9B.

On the interface 1102, the text 1111, the picture 1012, and the text 1013 in the original interface (that is, the interface 1101) are respectively presented as a card 1121, a card 1122, and a card 1123. A display form of a recognized entity text (text 1111) may be different from a display form of a general text. For example, a font color of the entity text is different and has an underscore, or is displayed in a capsule. The entity text in FIG. 9A to FIG. 9E is displayed in a capsule.

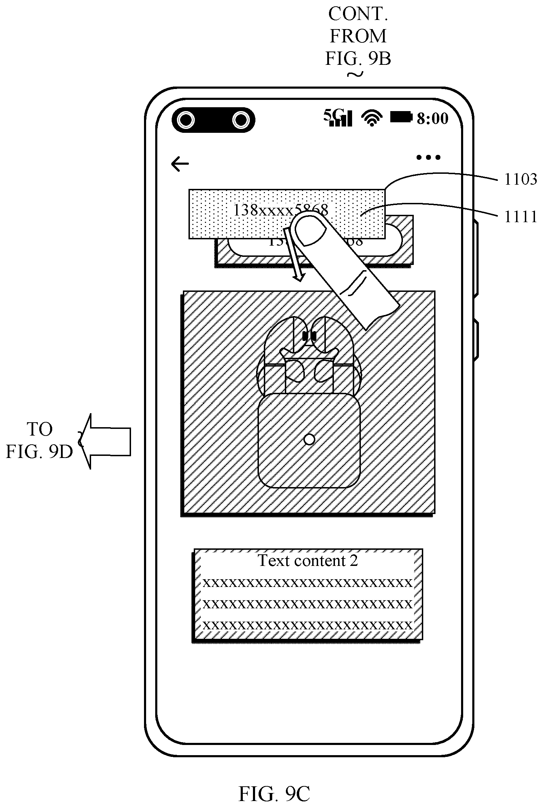

Then, for the general text on the interface 1102, the user may select the general text in a paint manner or the like. Referring to the foregoing embodiment shown in FIG. 7A to FIG. 7D, details are not described again. For the entity text, the user can directly long press the entity text without selecting it. The card is suspended and highlighted on the interface. Specifically, as shown in FIG. 9C, the user long presses the telephone number in the card 1121, the card 1103 is suspended and highlighted on the interface, and the card 1103 includes the text 1111.

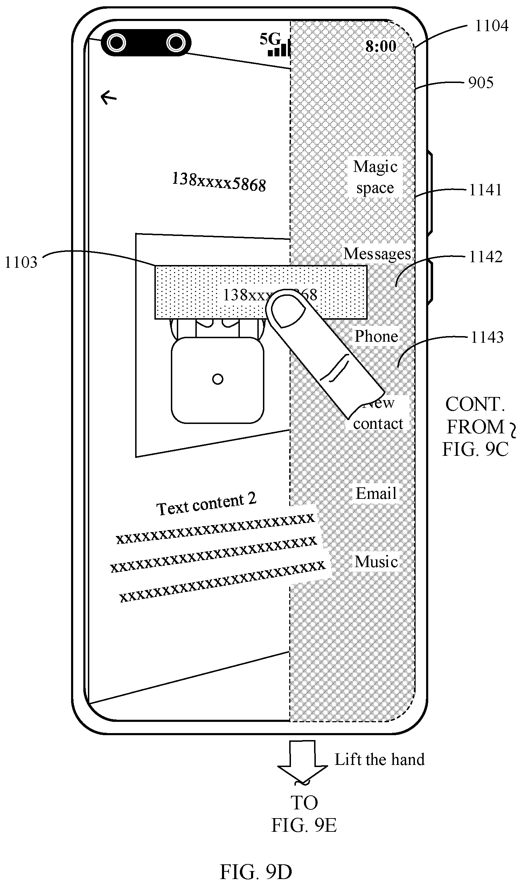

Then, the user may move the finger, and the card 1103 moves with the finger of the user, that is, the user may drag the card 1103. When the finger of the user enters a preset region on the side edge of the screen, a "magic portal" is triggered to open. The original interface (that is, the interface 1101) is displayed with a right view effect, and a side bar 1104 is displayed on the side edge of the screen, as shown in FIG. 9D. The side bar 1104 displays an icon of a service or an application program that matches an element selected by the user. For example, in FIG. 9D, an icon 1141 of a "messages" application program, an icon 1142 of a "phone" application program, and an icon 1143 of a "new contact" service may be displayed in the side bar 1104.

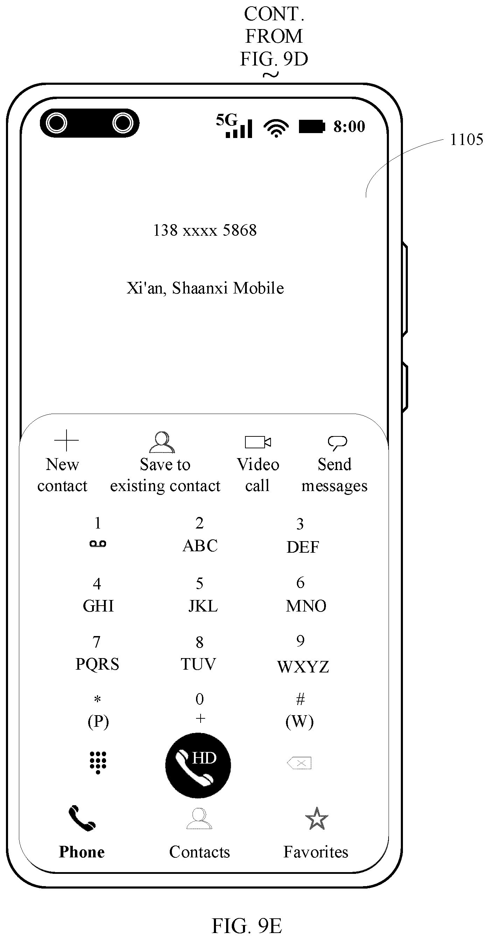

Then, the user continues to drag the card 1103. When the user drags the card 1103 to a region in which an icon of an application program or a service in the side bar 1104 is located and lifts the hand, the mobile phone sends data corresponding to the card 1103 to the application program or the service, and the application program or the service provides a related service according to the data corresponding to the card 1103. For example, the user drags the card 1103 to the icon 1142 of the "phone" application program in the side bar 1104 and lifts the hand, in response to the operation of the user, the mobile phone enables the phone application program and displays a dialing interface 1105, as shown in FIG. 9E.

According to the data sharing method provided in the embodiment, entity recognition is used to recognize an entity text in a text element. For the entity text, the user does not need to perform a selection operation, and may directly trigger display of a small card by using a long press operation. Then, the magic portal may be continued to be opened by using a drag operation, that is, the "magic portal" is selected and opened by using one long-press drag operation, to provide a service, thereby further simplifying a user operation and improving user experience.

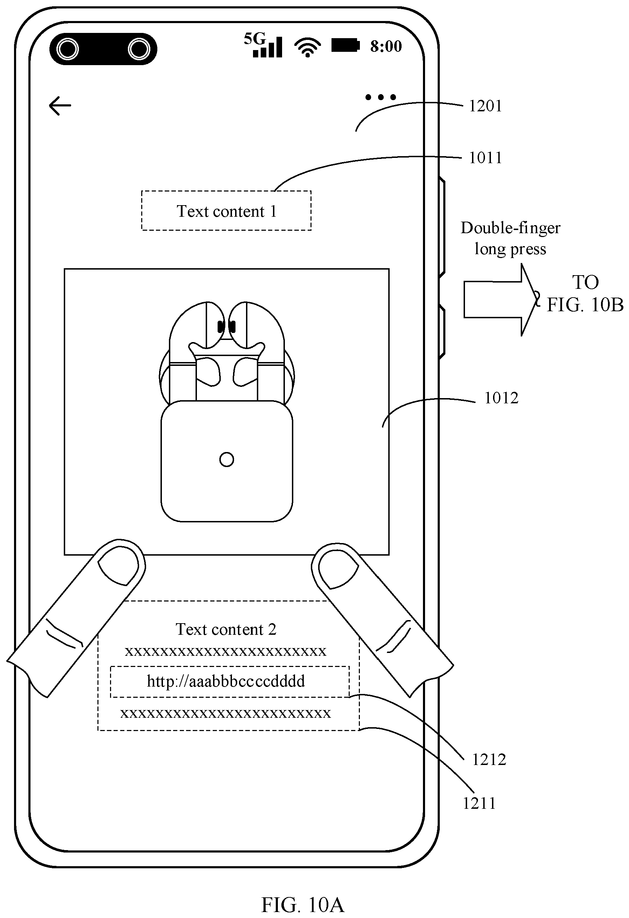

In a possible implementation, the entity text may further be linked to a corresponding service entry. The user can directly tap the entity text to open a service entry interface corresponding to the entity text. For details, refer to FIG. 10A to FIG. 10C.

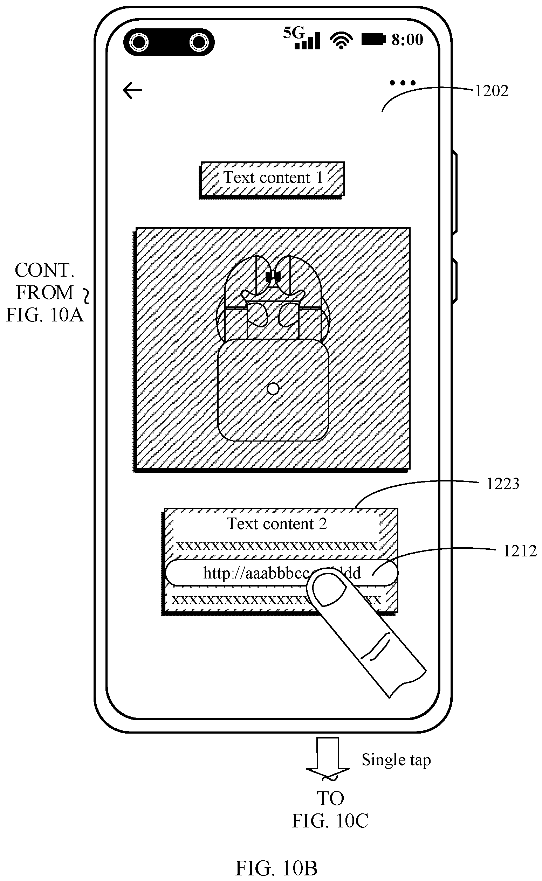

For example, FIG. 10A to FIG. 10C are a schematic diagram of an interface change of still another example data sharing method according to an embodiment of this application. As shown in FIG. 10A, an interface 1201 is displayed in a screen. The interface 1201 includes a text 1011, a picture 1012, and a text 1211, where the text 1211 includes a shopping link (pure text link) 1212. The user performs a double-finger long press operation on the interface 1201, and the mobile phone performs interface extraction, element grouping, and entity recognition in response to the double-finger long press operation of the user. Then, the mobile phone displays an interface 1202, as shown in FIG. 10B. On the interface 1202, the shopping link 1212 is displayed differently from another general text in a card 1223. A specific display manner is similar to that in the embodiment shown in FIG. 9A to FIG. 9E, and details are not described again.

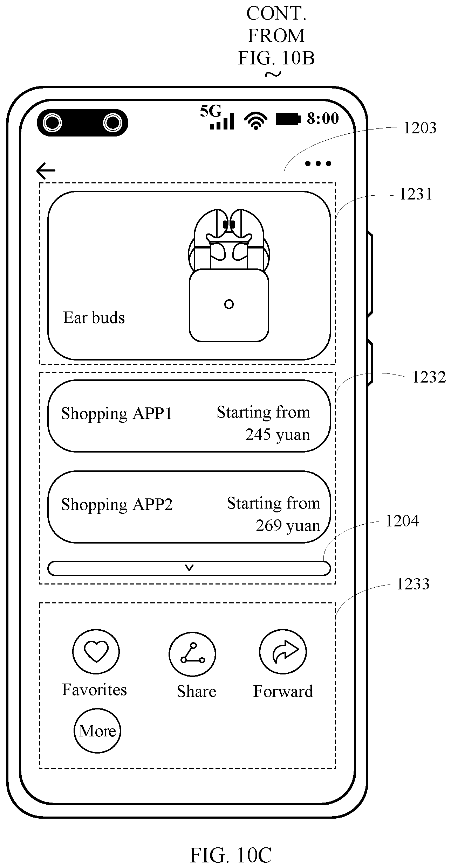

Then, the user may tap the shopping link 1212 in the card 1223. The mobile phone enters a preset service according to a type of the shopping link 1212, and recommends another service that matches the shopping link 1212. Specifically, the user taps the shopping link 1212 in FIG. 10B, and the interface jumps to a service interface 1203 shown in FIG. 10C.

Optionally, the service interface 1203 may include a main body part 1231, an enhanced service part 1232, and another service part 1233. The main body part 1231 is used to display related content of an entity text. The enhanced service part 1232 is used to display content of a preset service related to an entity text. The another service part 1233 is used to display another recommended service related to an entity text except the service of the enhanced service part. In this embodiment, the main body part 1231 is used to display key information corresponding to the shopping link 1212, that is, a picture corresponding to the shopping link 1212, as shown in FIG. 10B. The enhanced service part 1232 is used to display a result of performing shopping price comparison according to the shopping link 1212, for example, a price of an article corresponding to the shopping link 1212 in a shopping APP1 and a price thereof in a shopping APP2, as shown in FIG. 10B. The another service part 1233 is used to display a service entry (an icon, a card, and the like) of another service related to the shopping link 1212, for example, favorite, share, and forward, as shown in FIG. 10B.

It may be understood that only one service of a preset type may be included, or a plurality of services of a preset type may be included. In a case in which a plurality of services of the preset type are included, information about some of the plurality of services may be selected for display based on a degree of association between the services and the entity text, while the rest are hidden but can be expanded through an expansion bar. For example, the expansion bar may be shown in 1204 in FIG. 10A to FIG. 10C.

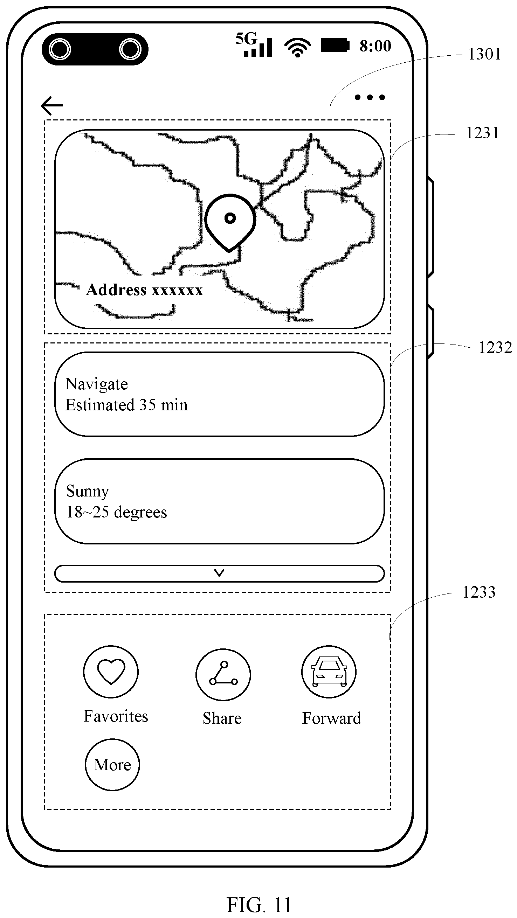

In a possible implementation, in a case in which the entity text is a location link, a service of the preset type may include, for example, a navigation service, a weather service, and another service may include, for example, favorite, share, and taxi hailing. The user taps the entity text, and the interface jumps to a service interface 1301 shown in FIG. 11.

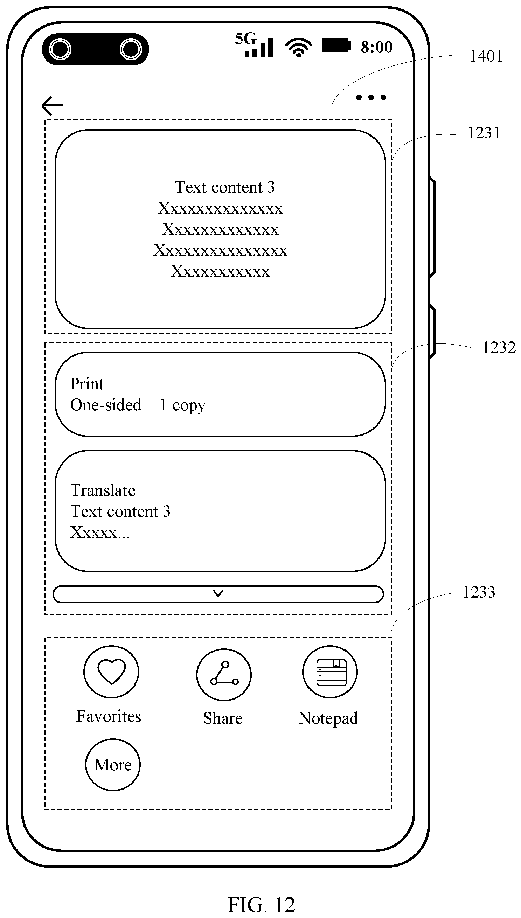

In another possible implementation, in a case in which the entity text is a web page link, a service of the preset type may include, for example, print and translate. The interface jumps to a service interface 1401 shown in FIG. 12, and another service may include, for example, favorite, share, and notepad.

In the service interface, the user may tap a control in the main body part 1231, the enhanced service part 1232 or another service part 1233 to enable a corresponding service. Specifically, the service interface 1203 shown in FIG. 10C is still used as an example. The user may tap any position in the main body part 1231 to jump to a page corresponding to the shopping link 1212. The user may further tap a control in the enhanced service part 1232 to enable the shopping APP1 or the shopping APP2, or enable the service by tapping a control in the another service part 1233 to enter a corresponding interface. Details are not described herein.

In addition, it may be understood that, on the interface shown in FIG. 10C, the user may return, by using an exit operation, to the interface shown in FIG. 10B, so that the foregoing operations may be separately performed on different elements on the interface, and the foregoing operations may be performed on a same element on the interface for a plurality of times to enter different services. The exit operation may include but is not limited to a sideward sliding operation or tapping a back control on the interface. The sideward sliding operation is an operation that slides from a left edge or a right edge of a screen to an inner side of the screen. It may be understood that a difference between the sideward sliding operation and the sideward sliding hover operation lies in that the sideward sliding hover operation performs hovering for preset duration after sideward sliding.

In the data sharing method provided in the embodiment, entity recognition is used to recognize an entity text in a text element. For the entity text, a smart transfer service may be directly triggered by a single-tap operation to enable a preset type of service, and another type of service entry is provided. That is, the user can enable a related service only by using a preset gesture (for example, a double-finger long press operation) and a single tap operation, and an entry of another service is displayed, thereby further improving operation convenience and improving user experience.

Embodiment 3: A sideward sliding hover operation triggers to enable a side bar, and interface extraction is performed in a lock state of the side bar, so as to perform smart transfer.

In this embodiment, enabling of the side bar may be triggered by using a sideward sliding hover operation, and a state of the side bar in this case is referred to as a temporary state. Then, the side bar is locked so that the side bar enters a lock state. When the side bar is in the lock state, a mobile phone may extract and display an element on an interface. In this embodiment of this application, when the side bar is in the lock state, the side bar and the extracted element are displayed on the interface, and the extracted element may be scaled down relative to the original interface to be displayed on a sub-interface, so as to reduce or avoid shielding of the extracted element by the side bar, thereby facilitating a user operation. For ease of description, an interface including the sub-interface and the side bar is referred to as a "lock state interface". The user can perform an operation such as long press, select, or drag on the extracted element in the "lock state interface". The user drags the element to a region in which an icon of an application program or a service in the side bar is located and lifts the hand, so as to trigger a smart transfer service.

Optionally, locking of the side bar may be triggered by using some preset gestures or operations. For example, when the side bar is in the temporary state, locking of the side bar is triggered by continuing to perform a sideward sliding operation, or when the side bar is in the temporary state, locking of the side bar is triggered by using a preset control in the side bar. This embodiment of this application sets no limitation on a specific manner of triggering locking of the side bar.

Optionally, in a case in which the side bar is in the lock state, the mobile phone may periodically perform interface extraction. Certainly, in another possible implementation, the operation of locking the side bar may alternatively trigger interface extraction only once, which is not limited in this embodiment of this application. After interface extraction, as in the foregoing embodiment, the mobile phone may group and display the extracted element. In addition, after interface extraction, the mobile phone may also perform entity recognition on a text element, and differently display the entity text during display, so that the user drags, in a manner of directly long pressing and dragging, the entity text into the region in which the icon of the application program or the service in the side bar is located, or enables, in a single tap manner, a service corresponding to the entity text. For details, refer to the foregoing Embodiment 1 and Embodiment 2. Details are not described again. In short, in a case without conflict, content in the solutions in Embodiment 1 and Embodiment 2 may be combined in this embodiment. Certainly, content of this embodiment may also be combined in Embodiment 1 and Embodiment 2. This embodiment mainly describes triggering of interface extraction and a display manner after interface extraction.

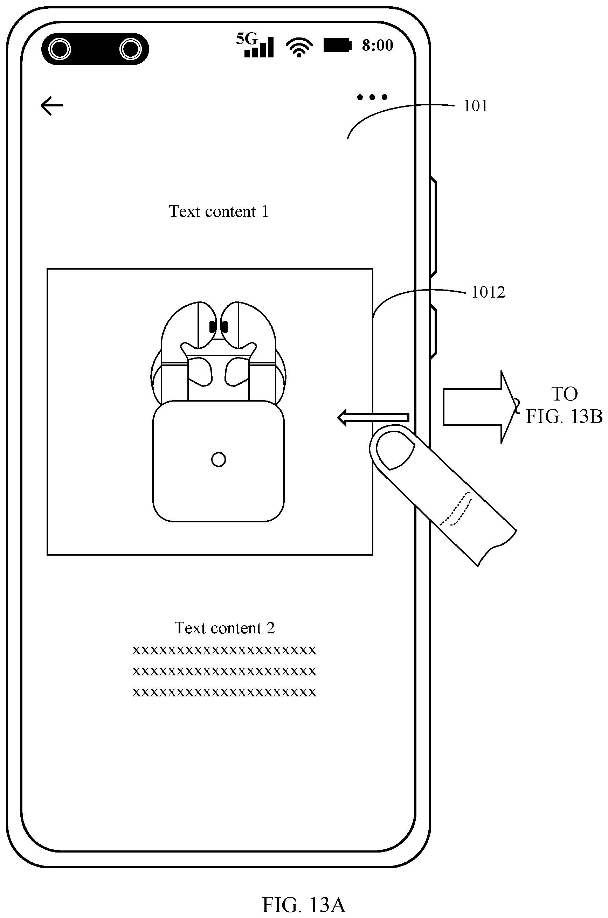

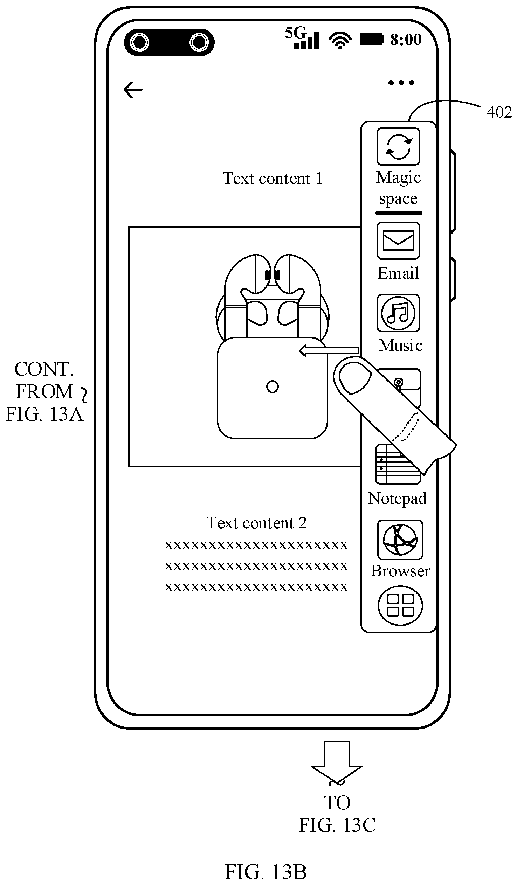

For example, FIG. 13A to FIG. 13F are a schematic diagram of an interface change of still another example data sharing method according to an embodiment of this application. As shown in FIG. 13A, an interface 101 is displayed in a screen. The interface 101 includes a picture 1012. The user performs a sideward sliding hover operation, and in response to the sideward sliding hover operation of the user, the mobile phone displays a side bar 402 in a temporary state, as shown in FIG. 13B.

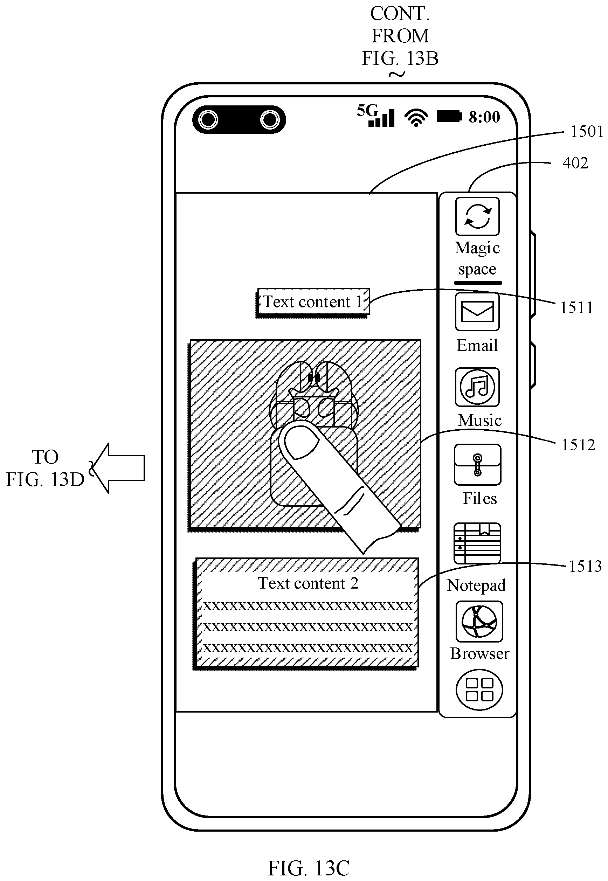

Then, the user does not lift the finger, and continues to slide toward the inner side of the screen. After the finger of the user slides by a preset distance, the side bar is locked to enter the lock state. In the lock state of the side bar, the mobile phone extracts elements on the interface 101, and displays a "lock state interface" according to the extracted elements, as shown in FIG. 13C. The "lock state interface" includes a sub-interface 1501, and the sub-interface 1501 includes a card 1511, a card 1512, and a card 1513 that are generated according to the extracted elements. Optionally, the card 1511, the card 1512, and the card 1513 may be highlighted (shown in the figure as pattern padding).

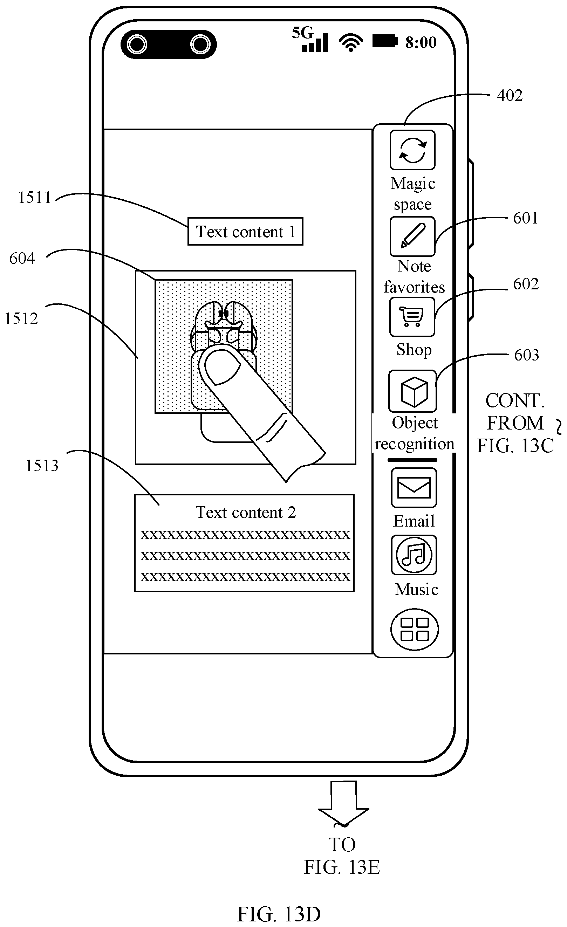

Then, the user long presses a card in the sub-interface 1501, or selects some content in a card. The mobile phone displays, in the side bar 402 according to a type of an element in the card selected by the user and semantics of the element, an icon of an application program or a service that matches this group of elements. Specifically, for example, the user long presses the card 1512. As shown in FIG. 13D, in response to a long press operation of the user, the mobile phone determines that an element in the card selected by the user is a picture. Therefore, the side bar 402 displays an icon 601 of "note favorites", an icon 602 of "shop", and an icon 603 of "object recognition". In addition, in response to the long press operation of the user, the card 1512 is scaled down to be displayed as a small card 604, and highlighting of the card in the sub-interface 1501 is canceled. Optionally, a padding or highlight effect may be set on the small card 604. FIG. 13D shows pattern padding.

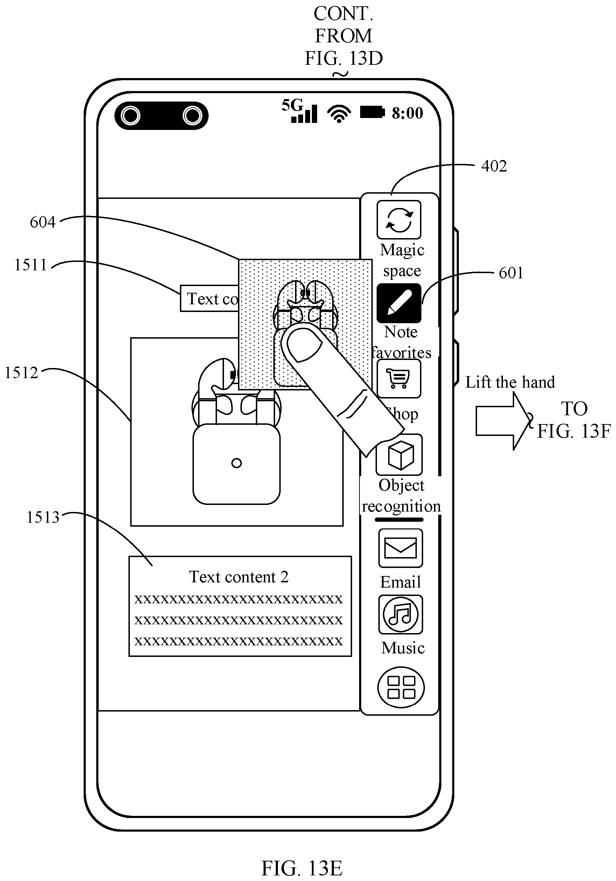

Then, the user moves the finger, and the small card 604 moves with the finger of the user, that is, the user drags the small card 604. In a drag process, when the small card 604 is close to an icon in the side bar 402, the icon may be highlighted, as shown in FIG. 13E.

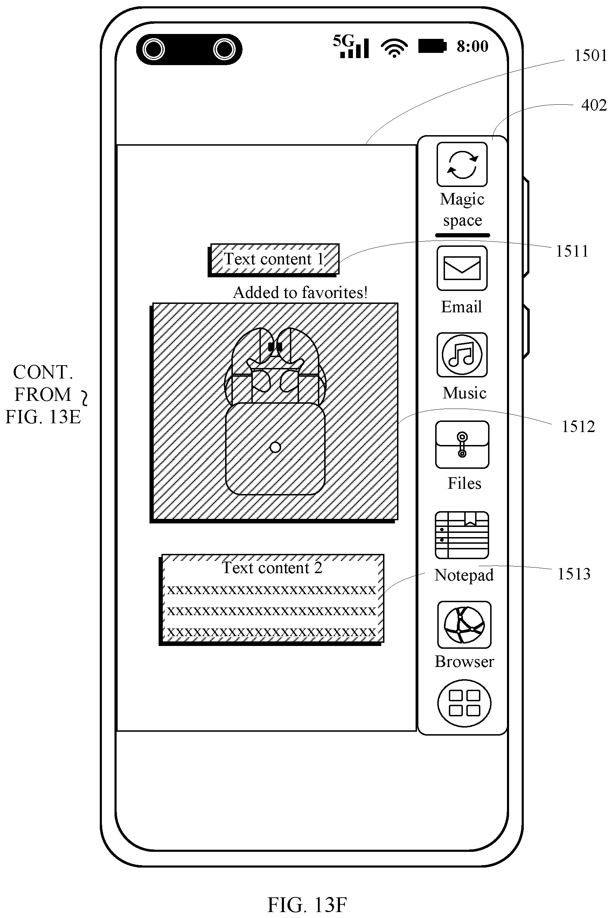

When the small card 604 is dragged to a region in which an icon of a service or an application program in the side bar 402 is located, the user lifts the hand, and the mobile phone transmits data (picture 1012) corresponding to the small card 604 to the service or the application program, where the service or the application program provides a related service according to the picture 1012. In an example in which the user drags the small card 604 to a region in which the icon 601 of "note favorites" is located and lifts the hand, in response to the operation of the user, the mobile phone enables a note favorites service and adds the picture 1012 to favorites. After adding to favorites is complete, relevant prompt information, such as "Added to favorites!", may be displayed on the interface to remind the user. In addition, the card 1511, the card 1512, and the card 1513 are restored to be highlighted, and the icon in the side bar 402 is restored to the default icon, as shown in FIG. 13F.

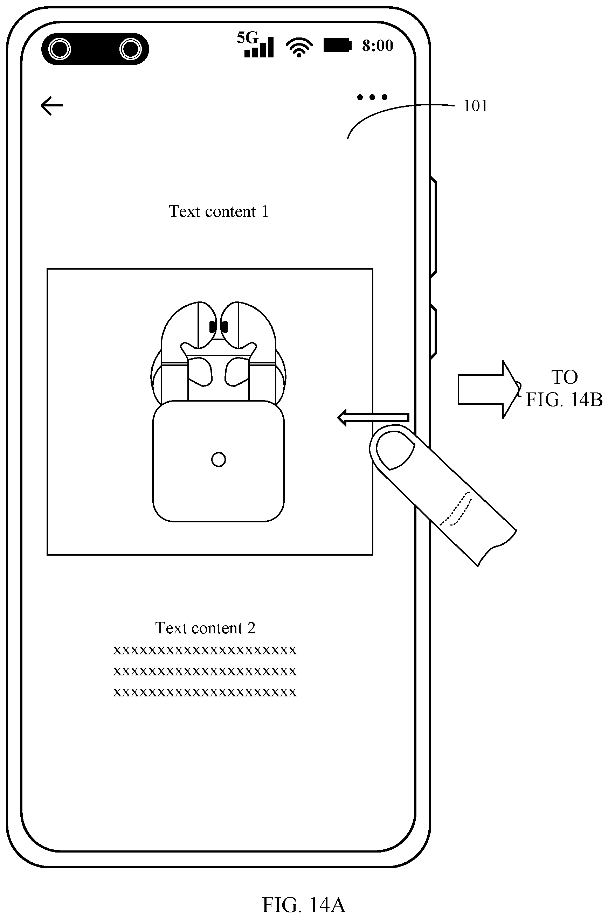

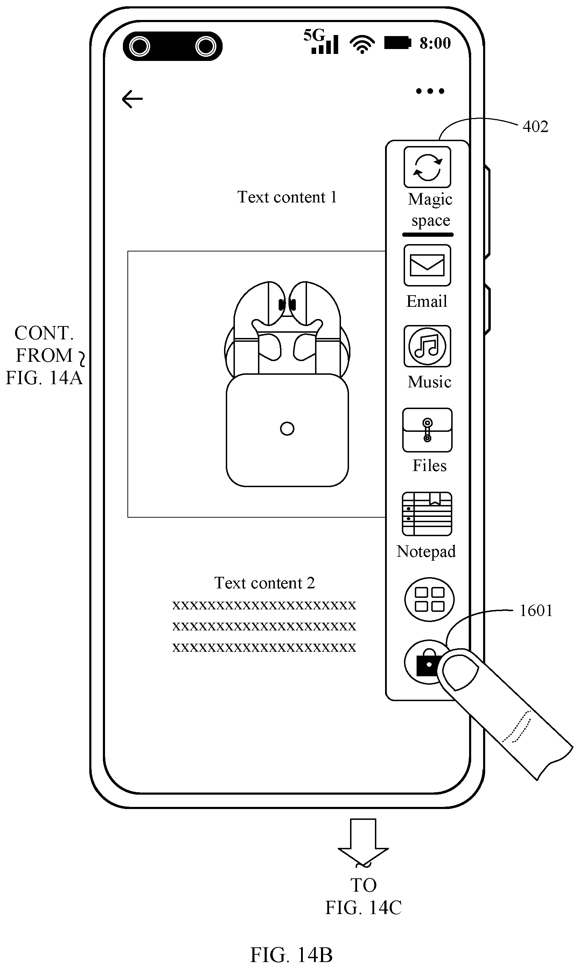

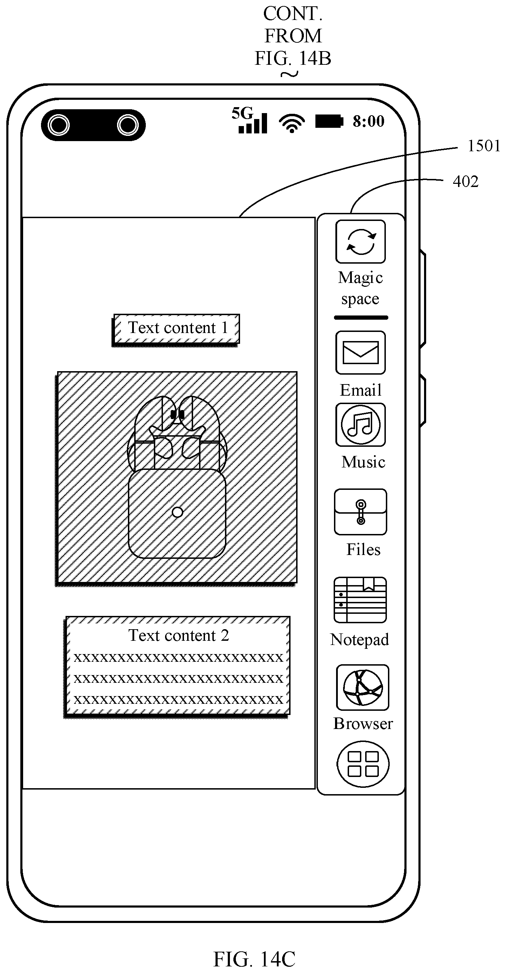

Optionally, locking of the side bar may alternatively be triggered by operating a lock control in the side bar. Specifically, referring to FIG. 14A to FIG. 14F, as shown in FIG. 14A, the screen displays the interface 101. The user performs a sideward sliding hover operation, and in response to the sideward sliding hover operation of the user, the mobile phone displays a side bar 402 in a temporary state, as shown in FIG. 14B. The side bar 402 in the temporary state includes a lock control 1601. The user taps the lock control 1601, and the side bar 402 is locked to enter the lock state. In the lock state of the side bar, the mobile phone extracts elements on the interface 101, and displays a "lock state interface" according to the extracted elements, as shown in FIG. 14C. Subsequently, the user performs an operation based on a sub-interface 1501 in the "lock state interface". For details, refer to FIG. 13A to FIG. 13F. Details are not described again.

In this embodiment, by locking the side bar, a plurality of types of elements on the interface are triggered to be extracted, and displayed to the user at the same time, so that the user selects any required element to enable a service, which is easy to use. Further, regardless of which type of element on the interface the user needs to operate on, the smart transfer service can be triggered simply through a sideward sliding operation, a long-press drag operation, and the like, thereby simplifying a user operation and improving user experience. In addition, same as the foregoing Embodiment 1 and Embodiment 2, in this embodiment, the user may also trigger the smart transfer service on the elements on the interface for a plurality of times, so that the user does not need to repeatedly perform an operation to trigger interface extraction, thereby further simplifying a user operation and improving user experience. In addition, in the lock state of the side bar, the mobile phone may periodically perform interface extraction. Even if the interface changes, a result of interface extraction may be continuously provided to the user, so that the user conveniently selects a required element at any time according to a requirement to perform the smart transfer service, thereby further improving user experience.

Optionally, in a possible implementation, the lock state of the side bar may be exited by using an exit operation twice, the temporary state is restored, the mobile phone stops interface extraction, and the "lock state interface" is exited. The exit operation may be, for example, a sideward sliding operation. In another possible implementation, the side bar may further include an unlock control in the lock state, and the user may tap the unlock control to exit the lock state of the side bar.

In addition, it may be understood that, in this embodiment of this application, the side bar may include a recommendation region and a permanent region, regardless of the temporary state or the lock state. FIG. 14C is used as an example. In the figure, 4021 is a recommendation region, 4022 is a permanent region, and a partition bar 4023 may be displayed between the recommendation region 4021 and the permanent region 4022. The recommendation region 4021 is used to display a service or an application program recommended by a system. For example, when the user selects an element, a service or an application program that matches the element and recommended by the system may be displayed in the recommendation region 4021. The permanent region 4022 is used to display a system-default or frequently-used application program or service of the user, and the like. When in use, a position of the partition bar 4023 may be adjusted up and down as a quantity of application programs or services in the recommendation region 4021 and the permanent region 4022 changes.

The following further describes the data sharing method provided in the embodiment of this application with reference to the interfaces shown in the foregoing Embodiment 1 to Embodiment 3.

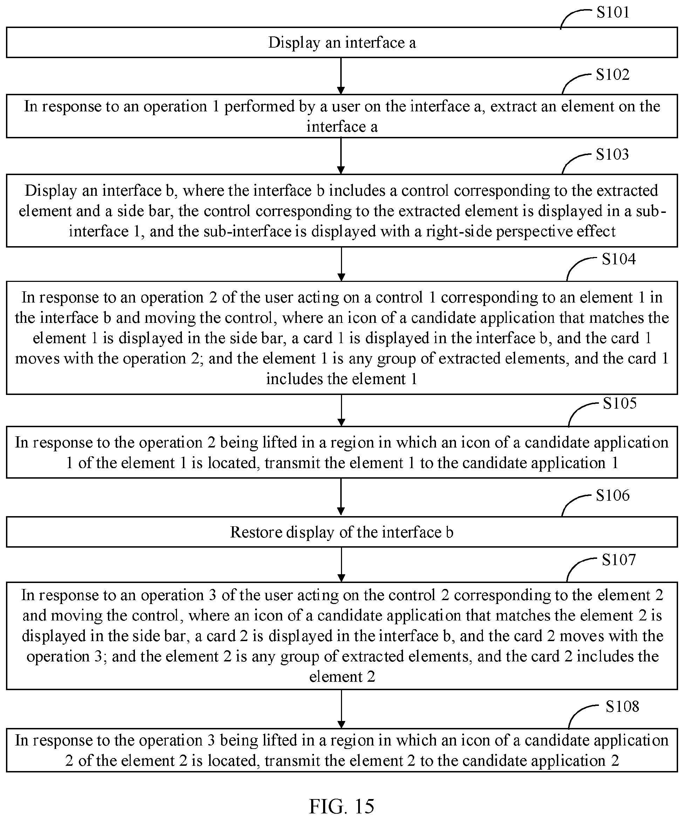

For example, FIG. 15 is a schematic flowchart of an example data sharing method according to an embodiment of this application. The method shown in this embodiment is a process corresponding to the foregoing Embodiment 1, and the method is performed by an electronic device. As shown in FIG. 15, the method includes the following steps:
S101: Display an interface a.
   The interface a may be, for example, the interface 101 or the interface 501 in the foregoing embodiment, which is not limited in this embodiment of this application.
S102: In response to an operation 1 performed by a user on the interface a, extract an element (hereinafter referred to as an extracted element) on the interface a.
   Optionally, the operation 1 may be the foregoing sideward sliding hover operation.
S103: Display an interface b, where the interface b includes a control corresponding to the extracted element and a side bar, the control corresponding to the extracted element is displayed in a sub-interface 1, and the sub-interface is displayed with a right perspective effect.
   Optionally, the interface b may be the "magic portal" interface in the foregoing Embodiment 1.
S104: In response to an operation 2 of the user acting on a control 1 corresponding to an element 1 on the interface b and moving (or dragging) the control, where an icon of a candidate application that matches the element 1 is displayed in the side bar, a card 1 is displayed on the interface b, and the card 1 moves with the operation 2; and the element 1 is any group of extracted elements, and the card 1 includes the element 1.
   Optionally, the operation 2 may be a long press and move operation, that is, the user long presses and moves the control 1, an icon of a candidate application that matches the element 1 is displayed in the side bar, and the card 1 corresponding to the element 1 is displayed on the interface b. Optionally, the card 1 may alternatively be another form of control such as a bubble or a capsule.
S105: In response to the operation 2 being lifted in a region in which an icon of a candidate application 1 of the element 1 is located, transmit the element 1 to the candidate application 1.
S106: Restore display of the interface b.
   After the operation 2 is completed, and the electronic device transmits the element 1 to the candidate application 1, display of the interface b may be restored. It may be understood that, after display of the interface b is restored, elements in the restored interface b may be the same as or different from elements on the interface b in step S103, but both include the control 1 corresponding to the element 1 and a control 2 corresponding to an element 2. This is also the case in other embodiments of this application, and details are not described again.
S107: In response to an operation 3 of the user acting on the control 2 corresponding to the element 2 and moving the control, where an icon of a candidate application that matches the element 2 is displayed in the side bar, a card 2 is displayed on the interface b, and the card 2 moves with the operation 3; and the element 2 is any group of extracted elements, and the card 2 includes the element 2.
   Optionally, the control 2 may be the same as or different from the control 1.
S108: In response to the operation 3 being lifted in a region in which an icon of a candidate application 2 of the element 2 is located, transmit the element 2 to the candidate application 2.

That is, after interface extraction is performed once, the electronic device may provide a smart transfer service for a plurality of times.

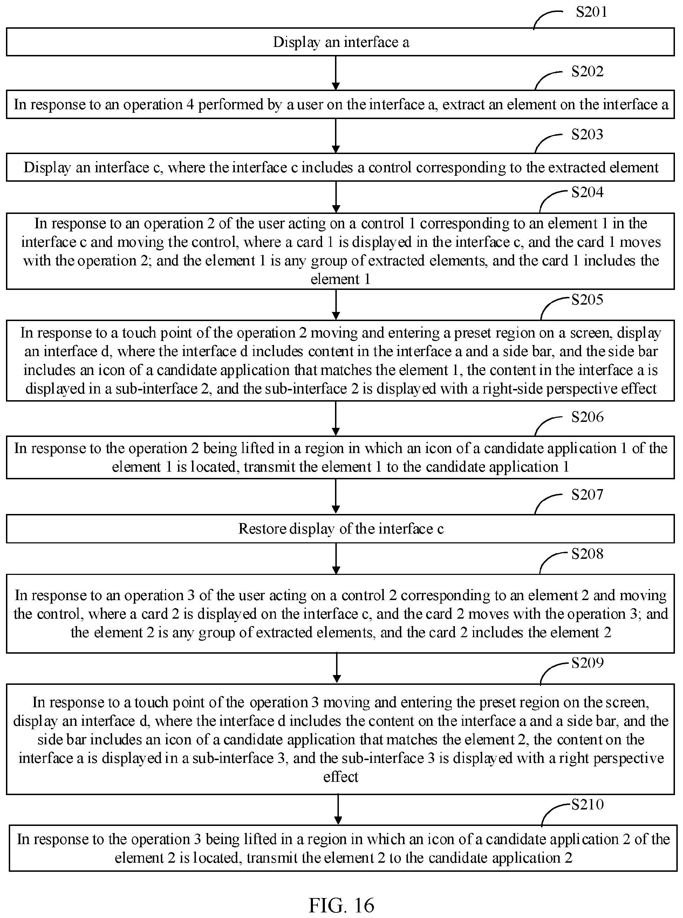

For example, FIG. 16 is a schematic flowchart of another example data sharing method according to an embodiment of this application. The method shown in this embodiment is a process corresponding to the foregoing Embodiment 2, and the method is performed by an electronic device. As shown in FIG. 16, the method includes the following steps:
S201: Display an interface a.
S202: In response to an operation 4 performed by a user on the interface a, extract an element (referred to as an extracted element) on the interface a.
   Optionally, the operation 4 may be the preset gesture in the foregoing embodiment, that is, one of a double-finger long press operation, three-finger leftward sliding, three-finger rightward sliding, knuckle upward sliding, knuckle leftward sliding, or knuckle rightward sliding.
S203: Display an interface c, where the interface c includes a control corresponding to the extracted element.
   Optionally, the interface c may be the interface 902 in the foregoing Embodiment 2.
S204: In response to an operation 2 of the user acting on a control 1 corresponding to an element 1 on the interface c and moving the control, where a card 1 is displayed on the interface c, and the card 1 moves with the operation 2; and the element 1 is any group of extracted elements, and the card 1 includes the element 1.
   Optionally, the operation 2 may be an operation of long pressing and moving the control 1, or may be an operation of selecting and long pressing and moving the control 1.
S205: In response to a touch point of the operation 2 moving and entering a preset region on a screen, display an interface d, where the interface d includes content on the interface a and a side bar, and the side bar includes an icon of a candidate application that matches the element 1, the content on the interface a is displayed in a sub-interface 2, and the sub-interface 2 is displayed with a right perspective effect.
   That is, the interface d is a "magic portal" interface. Different from the interface b, in this embodiment, the side bar of the interface d includes an icon of a candidate application that matches the element 1.
S206: In response to the operation 2 being lifted in a region in which an icon of a candidate application 1 of the element 1 is located, transmit the element 1 to the candidate application 1.
S207: Restore display of the interface c.
S208: In response to an operation 3 of the user acting on a control 2 corresponding to an element 2 and moving the control, where a card 2 is displayed on the interface c, and the card 2 moves with the operation 3; and the element 2 is any group of extracted elements, and the card 2 includes the element 2.
S209: In response to a touch point of the operation 3 moving and entering the preset region on the screen, display an interface d, where the interface d includes the content on the interface a and a side bar, and the side bar includes an icon of a candidate application that matches the element 2, the content on the interface a is displayed in a sub-interface 3, and the sub-interface 3 is displayed with a right perspective effect.
S210: In response to the operation 3 being lifted in a region in which an icon of a candidate application 2 of the element 2 is located, transmit the element 2 to the candidate application 2.

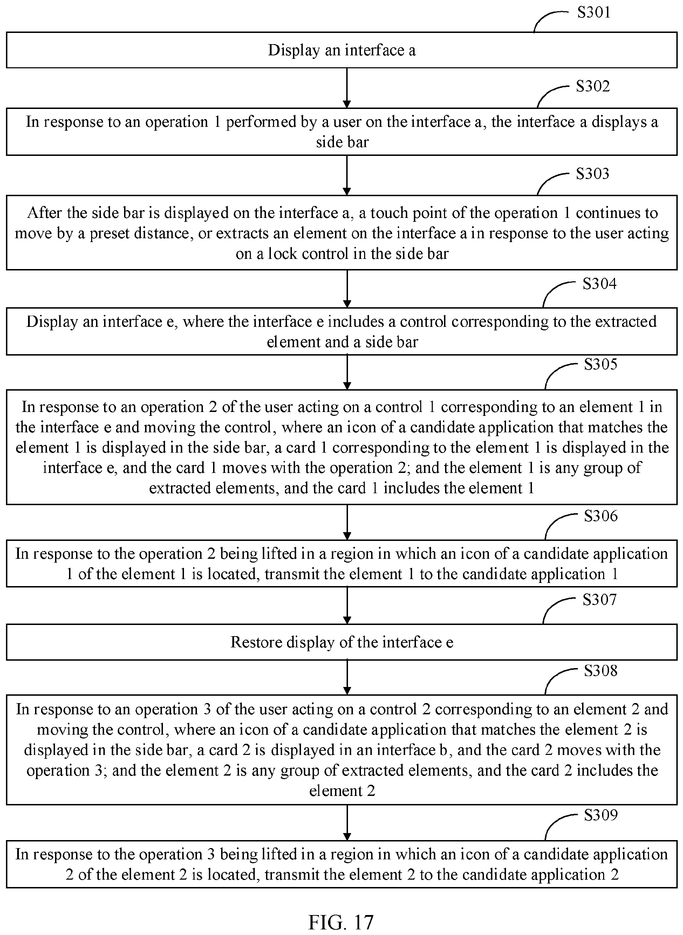

For example, FIG. 17 is a schematic flowchart of still another example data sharing method according to an embodiment of this application. The method shown in this embodiment is a process corresponding to the foregoing Embodiment 3, and the method is performed by an electronic device. As shown in FIG. 17, the method includes the following steps:
S301: Display an interface a.
S302: In response to an operation 1 performed by a user on the interface a, the interface a displays a side bar.
S303: After the side bar is displayed on the interface a, a touch point of the operation 1 continues to move by a preset distance, or extracts an element on the interface a in response to the user acting on a lock control (also referred to as a sixth control) in the side bar.
S304: Display an interface e, where the interface e includes a control corresponding to the extracted element and a side bar.
   Optionally, the interface e may be the "lock state interface" in the foregoing Embodiment 3.
S305: In response to an operation 2 of the user acting on a control 1 corresponding to an element 1 on the interface e and moving the control, where an icon of a candidate application that matches the element 1 is displayed in the side bar, a card 1 corresponding to the element 1 is displayed on the interface e, and the card 1 moves with the operation 2; and the element 1 is any group of extracted elements, and the card 1 includes the element 1.
S306: In response to the operation 2 being lifted in a region in which an icon of a candidate application 1 of the element 1 is located, transmit the element 1 to the candidate application 1.
S307: Restore display of the interface e.
S308: In response to an operation 3 of the user acting on a control 2 corresponding to an element 2 and moving the control, where an icon of a candidate application that matches the element 2 is displayed in the side bar, a card 2 is displayed on an interface b, and the card 2 moves with the operation 3; and the element 2 is any group of extracted elements, and the card 2 includes the element 2.
S309: In response to the operation 3 being lifted in a region in which an icon of a candidate application 2 of the element 2 is located, transmit the element 2 to the candidate application 2.

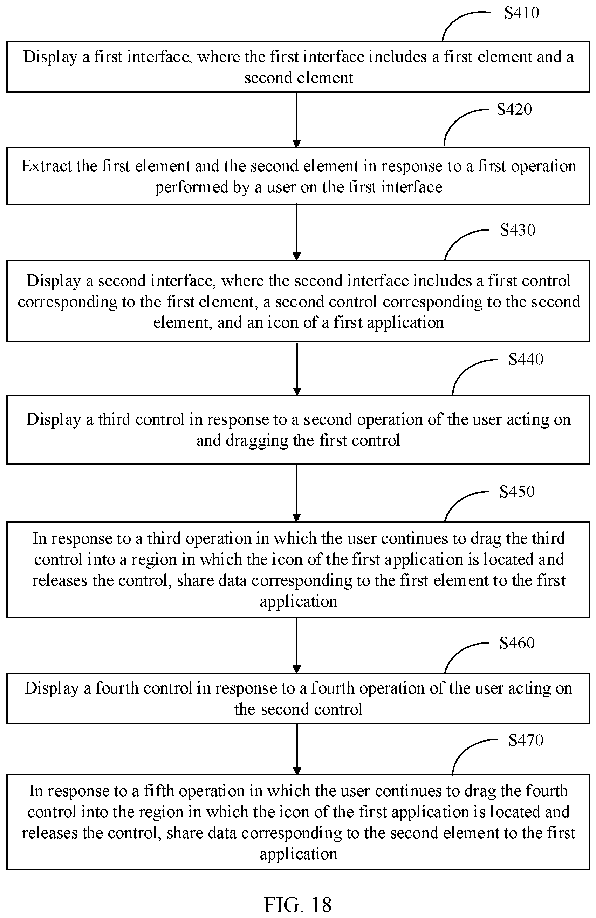

With reference to the processes shown in FIG. 15 and FIG. 17, referring to FIG. 18, the data sharing method provided in this embodiment of this application may include the following steps:
S410: Display a first interface, where the first interface includes a first element (also referred to as first content) and a second element (also referred to as second content).
   The first interface is, namely, the interface a. Types of the first element and the second element may be the same or different.
S420: Extract the first element and the second element in response to a first operation performed by a user on the first interface.

Optionally, the first operation may be the operation 1 (sideward sliding hover operation) in the foregoing Embodiment 1, or may be the operation 4 (an operation that continues to slide after a sideward sliding hover operation) in Embodiment 3, or may be the sideward sliding hover operation and the operation performed on the lock control in the side bar after the sideward sliding hover operation in Embodiment 3.

Optionally, there may be a plurality of types of elements extracted by the electronic device on the interface, including a text element, a picture element, a video element, a link element, and the like.

S430: Display a second interface, where the second interface includes a first control corresponding to the first element, a second control corresponding to the second element, and an icon of a first application.

Optionally, the second interface may be the interface b ("magic portal" interface) in the foregoing Embodiment 1, or may be the interface e ("lock state interface") in the foregoing Embodiment 3.

Optionally, the second interface may further include a control bar (for example, a side bar), and the icon of the first application may be displayed in the control bar.

Optionally, some or all content of the first element may be displayed on the first control, and some or all content of the second element may be displayed on the second control.

Optionally, when displaying the second interface, the electronic device may directly display the extracted element on the second interface, or may extract key information, perform semantic analysis, perform entity recognition, or perform grouping for the extracted element for display. A display form includes but is not limited to a card, a capsule, a bubble, and the like.

Optionally, the second interface may further include content in the original interface (that is, the first interface).

S440: Display a third control in response to a second operation of the user acting on the first control.

Optionally, the second operation may be a long press operation, or may be a long press operation after selection. In a possible implementation, when the first element is a text element, the second operation may be an operation of long pressing the text element or long pressing the first control. In another possible implementation, the first interface further includes another element (also referred to as third content), and the first control further displays another element. That is, smart transfer involves data corresponding to some elements in the first control. In this case, if the first element is a general text, the second operation may be a long press operation after the text element is selected. If the first element is an entity text, a first sub-control may be displayed on the first control, the first element is displayed on the first sub-control, and the second operation may be an operation of long pressing the first sub-control.

Optionally, the third control may be, for example, a card, and some or all content of the first element is displayed on the card.

Optionally, in response to the second operation, the control bar displays an icon of a second application that matches the first element.

S450: In response to a third operation of the user continuing to drag the third control into a region in which the icon of the first application is located and releasing the control, share data corresponding to the first element with the first application.

Specifically, the electronic device detects the third operation, and then shares the first element with the first application in response to the third operation.

S460: Display a fourth control in response to a fourth operation of the user acting on the second control.

Similar to the second operation, the fourth operation may be a long press operation or a long press operation after selection. In a possible implementation, when the second element is a picture element, the second operation may be an operation of long pressing the picture element.

Optionally, the fourth control may be, for example, a card, and some or all content of the second element is displayed on the card.

Optionally, in response to the fourth operation, the control bar displays an icon of a third application that matches the second element.

S470: In response to a fifth operation of the user continuing to drag the fourth control into the region in which the icon of the first application is located and releasing the control, share data corresponding to the second element with the first application.

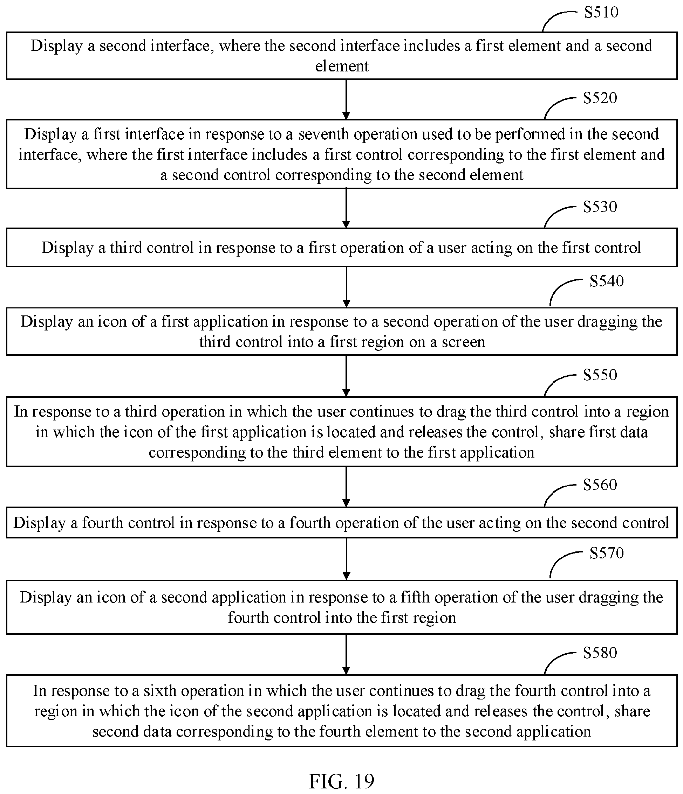

With reference to the process shown in FIG. 16, referring to FIG. 19, the data sharing method provided in this embodiment of this application may include the following steps:

S510: Display a second interface, where the second interface includes a first element and a second element.

In this embodiment, the second interface is, namely, the interface a. Types of the first element and the second element may be the same or different.

S520: Display a first interface in response to a seventh operation used to be performed in the second interface, where the first interface includes a first control corresponding to the first element and a second control corresponding to the second element.

Optionally, the seventh operation may be the operation 3 in the foregoing Embodiment 2, that is, one of a double-finger long press operation, a three-finger leftward sliding operation, a three-finger rightward sliding operation, a knuckle upward sliding operation, a knuckle leftward sliding operation, a knuckle rightward sliding operation, or the like.

In this embodiment, the first interface is, namely, the interface c.

S530: Display a third control in response to a first operation of a user acting on the first control.

The third control in this embodiment may be the same as the third control in the embodiment shown in FIG. 18, and details are not described again.

The first operation in this embodiment may be the same as the second operation in the embodiment shown in FIG. 18, and details are not described again.

S540: Display an icon of a first application in response to a second operation of the user dragging the third control into a first region on a screen.

Specifically, the electronic device detects the second operation of dragging the third control into the first region on the screen, and displays a control bar in response to the second operation, where the control bar includes an icon of at least one application, and the at least one application includes the first application. Optionally, the icon of the at least one application further includes an icon of a third application that matches the first element. Optionally, the third application and the first application may be a same application, or may be different applications.

Optionally, the first region is, namely, the preset region of the screen in the foregoing embodiment.

S550: In response to a third operation of the user continuing to drag the third control into a region in which the icon of the first application is located and releasing the control, share first data corresponding to the third element with the first application.

Specifically, the electronic device detects the third operation of continuing to drag the third control into the region in which the icon of the first application is located and releasing the control, and shares the first data corresponding to the third control with the first application in response to the third operation.

S560: Display a fourth control in response to a fourth operation of the user acting on the second control.

The fourth operation in this embodiment may be the same as the fourth operation in the embodiment shown in FIG. 18, and details are not described again.

S570: Display an icon of a second application in response to a fifth operation of the user dragging the fourth control into the first region.

Specifically, the electronic device detects the fifth operation of dragging the fourth control into the first region on the screen, and displays a control bar in response to the fifth operation, where the control bar includes an icon of at least one application, and the at least one application includes the first application. Optionally, the icon of the at least one application further includes an icon of a fourth application that matches the first element. Optionally, the fourth application and the second application may be a same application, or may be different applications.

S580: In response to a sixth operation of the user continuing to drag the fourth control into a region in which the icon of the second application is located and releasing the control, share second data corresponding to the fourth element with the second application.

Specifically, the electronic device detects the sixth operation of continuing to drag the fourth control into the region in which the icon of the second application is located and releasing the control, and shares the second data corresponding to the fourth control with the second application in response to the sixth operation.

Optionally, the first application and the second application may be a same application, or may be different applications.

In the foregoing embodiments shown in FIG. 15 to FIG. 19, a specific implementation process and beneficial effects of the method are the same as those of the foregoing Embodiments 1 to 3, and details are not described again.

The following describes a structure of an electronic device to which the data sharing method provided in embodiments of this application is applicable.

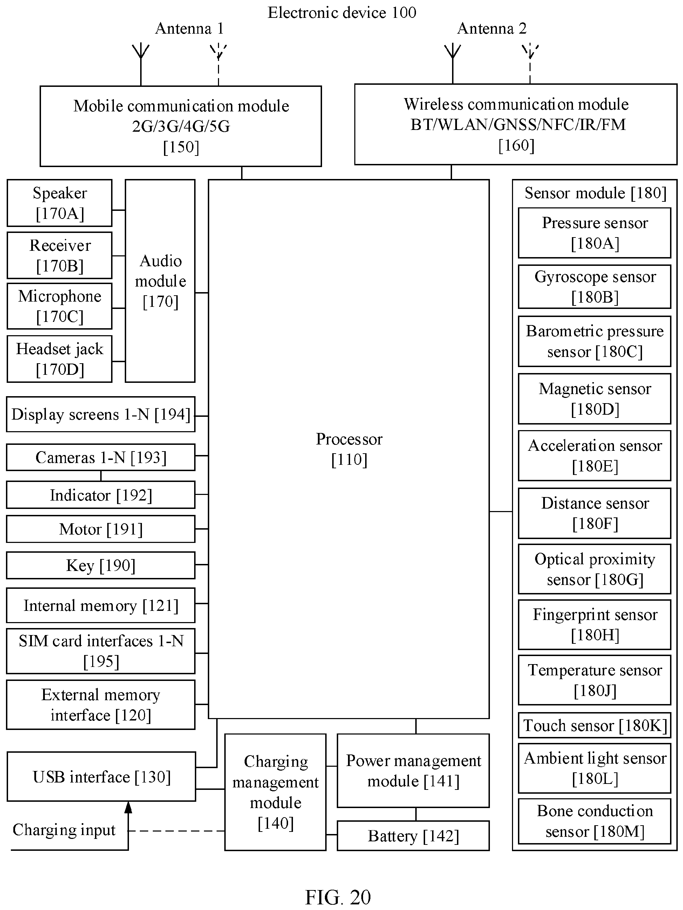

For example, FIG. 20 is a schematic diagram of a structure of an electronic device 100 according to an embodiment of this application. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display screen 194, and a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure illustrated in this embodiment of this application constitutes no specific limitation on the electronic device 100. In some other embodiments of this application, the electronic device 100 may include more or fewer components than those shown in the figure, combine some components, split some components, or have different component arrangements. The parts shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the electronic device 100. The controller may generate an operation control signal based on instruction operation code and a timing signal, to complete control of instruction fetching and instruction execution.

A memory may be further disposed in the processor 110 to store instructions and data. In some embodiments, the memory in the processor 110 is a cache memory. The memory may store instructions or data recently used or cyclically used by the processor 110. If the processor 110 needs to use the instructions or the data again, the processor 110 may directly invoke the instructions or the data from the memory. This avoids repeated access and reduces a waiting time of the processor 110, thereby improving system efficiency.

In some embodiments, the processor 110 may include one or more interfaces.

It may be understood that, an interface connection relationship between the modules shown in this embodiment of this application is merely an example for description, and constitutes no limitation on the structure of the electronic device 100. In some other embodiments of this application, the electronic device 100 may alternatively use an interface connection manner different from that in the foregoing embodiment, or a combination of a plurality of interface connection manners.

The electronic device 100 implements a display function by using the GPU, the display screen 194, the application processor, and the like. The GPU is a microprocessor for image processing, and is connected to the display screen 194 and the application processor. The GPU is configured to perform mathematical and geometric computing for graphics rendering. The processor 110 may include one or more GPUs, which execute program instructions to generate or change display information.

The display screen 194 is configured to display an image, a video, and the like. In some embodiments, the electronic device 100 may include one or N display screens 194, where N is a positive integer greater than 1.

The external memory interface 120 may be configured to connect to an external memory card, for example, a Micro SD card, to expand a storage capability of the electronic device 100. The external memory card communicates with the processor 110 through the external memory interface 120, to implement a data storage function. For example, files such as music and a video are stored in the external memory card.

The internal memory 121 may be configured to store computer-executable program code, and the executable program code includes instructions. The processor 110 runs the instructions stored in the internal memory 121, to perform various function applications and data processing of the electronic device 100. The internal memory 121 may include a program storage area and a data storage area. The program storage area may store an operating system, an application required by at least one function (for example, a sound playback function or an image playback function), and the like. The data storage area may store data (for example, audio data and a phone book) and the like created during use of the electronic device 100. In addition, the internal memory 121 may include a high-speed random access memory, and may further include a nonvolatile memory, for example, at least one magnetic disk storage device, a flash memory device, or a universal flash storage (universal flash storage, UFS).

The touch sensor 180K is also referred to as a "touch panel". The touch sensor 180K may be disposed on the display screen 194. The touch sensor 180K and the display screen 194 form a touchscreen, which is also referred to as "touch control screen". The touch sensor 180K is configured to detect a touch operation performed on or near the touch sensor. The touch sensor may transfer the detected touch operation to the application processor to determine a type of a touch event. A visual output related to the touch operation may be provided by using the display screen 194. In some other embodiments, the touch sensor 180K may alternatively be disposed on a surface of the electronic device 100, at a position different from that of the display screen 194.

The foregoing describes in detail examples of the data sharing method according to embodiments of this application. It may be understood that to implement the foregoing functions, the electronic device includes corresponding hardware and/or software modules for performing the functions. A person skilled in the art should be easily aware that the example units and algorithm steps described with reference to the embodiments disclosed in this specification can be implemented in this application in a form of hardware or a combination of hardware and computer software. Whether a specific function is performed by hardware or hardware driven by computer software depends on a particular application and a design constraint of the technical solutions. A person skilled in the art may use different methods to implement the described functions with reference to embodiments for each particular application, but it should not be considered that the implementation goes beyond the scope of this application.

In this embodiment of this application, the electronic device may be divided into functional modules based on the foregoing method examples. For example, the electronic device may be divided into functional modules corresponding to the functions, such as a detection unit, a processing unit, and a display unit; or two or more functions may be integrated into one module. The integrated module may be implemented in a form of hardware, or may be implemented in a form of a software functional module. It should be noted that division of the modules in the embodiments of this application is an example, and is merely logical function division. During actual implementation, there may be another division manner.

It should be noted that all related content of the steps in the foregoing method embodiments may be cited to function description of a corresponding functional module. Details are not described herein again.

The electronic device provided in this embodiment is configured to perform the data sharing method. Therefore, a same effect as that in the foregoing implementation method can be achieved.

When an integrated unit is used, the electronic device may further include a processing module, a storage module, and a communication module. The processing module may be configured to control and manage an action of the electronic device. The storage module may be configured to support the electronic device in executing stored program code, data, and the like. The communication module can be configured to support communication between the electronic device and another device.

The processing module may be a processor or controller. The processor may implement or execute various example logical blocks, modules, and circuits described with reference to content disclosed in this application. The processor may alternatively be a combination that implements a computing function, for example, a combination of one or more microprocessors or a combination of digital signal processing (digital signal processor, DSP) and a microprocessor. The storage module may be a memory. The communication module may be specifically a device, for example, a radio frequency circuit, a Bluetooth chip, or a Wi-Fi chip, that interacts with another electronic device.

In an embodiment, when the processing module is a processor and the storage module is a memory, the electronic device in the embodiments may be a device having the structure shown in FIG. 20.

An embodiment of this application further provides a computer-readable storage medium, where the computer-readable storage medium stores a computer program, and when the computer program is executed by a processor, the processor is enabled to perform the data sharing method in any one of the foregoing embodiments.

An embodiment of this application further provides a computer program product. When the computer program product is run on a computer, the computer is enabled to perform the related steps to implement the data sharing method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, so that the chip performs the data sharing method in the foregoing method embodiments.

The electronic device, the computer-readable storage medium, the computer program product, or the chip provided in the embodiments may be configured to perform the corresponding method provided above. Therefore, for beneficial effects that can be achieved by the electronic device, the computer-readable storage medium, the computer program product, or the chip, refer to the beneficial effects of the corresponding method provided above. Details are not described herein again.

It may be understood by a person skilled in the art from the foregoing descriptions of the implementations that, for convenience and brevity of description, division of the foregoing functional modules is merely used as an example for description. In actual application, the foregoing functions may be allocated to different functional modules as required for implementation, that is, an internal structure of the apparatus is divided into different functional modules, to complete all or some of the functions described above.

In the several embodiments provided in this application, it should be understood that the disclosed apparatus and method may be implemented in another manner. For example, the described apparatus embodiment is merely an example. For example, the division into the modules or units is merely a logical function division, and there may be another division manner in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may be one or more physical units, may be located in one place, or may be distributed in a plurality of different places. Some or all of the units may be selected based on actual requirements to achieve the objectives of the solutions in the embodiments.

In addition, the functional units in the embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions in the embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods in the embodiments of this application. The storage medium includes various media that can store program code, for example, a USB flash drive, a removable hard disk, a read-only memory (read only memory, ROM), a random access memory (random access memory, RAM), a magnetic disk, or an optical disc.

The foregoing content is merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A data sharing method, wherein the method is performed by an electronic device, and the method comprises:
displaying a first interface, wherein the first interface comprises first content and second content;
displaying a second interface in response to a first operation performed by a user in the first interface, wherein the second interface comprises a first control corresponding to the first content, a second control corresponding to the second content, and an icon of a first application;
displaying a third control in response to a second operation of the user acting on the first control;
detecting a third operation of continuing to drag the third control into a region in which the icon of the first application is located and releasing the third control;
sharing data corresponding to the first content with the first application in response to the third operation;
displaying a fourth control in response to a fourth operation of the user acting on the second control;
detecting a fifth operation of continuing to drag the fourth control into the region in which the icon of the first application is located and releasing the fourth control; and
sharing data corresponding to the second content with the first application in response to the fifth operation.

2. The method according to claim 1, wherein the second interface comprises a control bar, the control bar comprises an icon of at least one application, and the at least one application comprises the first application.

3. The method according to claim 1 or 2, wherein the method further comprises:
displaying, in response to the second operation, an icon of a second application that matches the first content; and
displaying, in response to the fourth operation, an icon of a third application that matches the second content.

4. The method according to claim 3, wherein the method further comprises:
displaying a fifth control in response to a sixth operation of the user acting on the first control;
detecting a seventh operation of continuing to drag the fifth control into a region in which the icon of the second application is located and releasing the fifth control; and
sharing the data corresponding to the first content with the second application in response to the seventh operation.

5. The method according to any one of claims 1 to 4, wherein the first content is displayed on both the first control and the third control, and the second content is displayed on both the second control and the fourth control.

6. The method according to claim 5, wherein the first content is a text, the first interface further comprises third content, the third content is a text, the first content and the third content are displayed on the first control, and the second operation is: selecting and long pressing the first content on the second control; and
the second content is an image, and the fourth operation is: long pressing the image.

7. The method according to claim 5, wherein the first content is an entity text, the first interface further comprises third content, the third content is a text, the third content and a first sub-control are displayed on the first control, the first content is displayed on the first sub-control, and the second operation is: long pressing the first sub-control.

8. The method according to claim 7, wherein the method further comprises:
displaying a third interface in response to an operation of tapping the first sub-control by the user, wherein the third interface comprises an interface of at least one application that matches the first content.

9. The method according to any one of claims 1 to 8, wherein the first operation is: performing a first sliding operation from a screen edge of the electronic device to an inner side, and staying at an end point of the first sliding operation for more than preset duration, wherein a sliding distance of the first sliding operation exceeds a first preset distance; and
the second interface further comprises some or all content of the first interface, and the content of the first interface is displayed with a right perspective effect.

10. The method according to claim 9, wherein the first control and the second control are displayed with a right perspective effect.

11. The method according to claim 9, wherein the first control and the second control are displayed in a floating manner above a layer at which the content of the first interface is located.

12. The method according to claim 11, wherein the first content and the second content are links, the first control comprises fourth content, the second control comprises fifth content, the fourth content is obtained from a web page corresponding to the first content, and the fifth content is obtained from a web page corresponding to the second content.

13. The method according to any one of claims 1 to 8, wherein the first operation is: performing a first sliding operation from a screen edge of the electronic device to an inner side, staying at an end point of the first sliding operation for more than preset duration, and then continuing to perform a second sliding operation; and a sliding distance of the first sliding operation exceeds a first preset distance, and a sliding distance of the second sliding operation exceeds a second preset distance; and
the displaying a second interface in response to a first operation performed by a user on the first interface comprises:
displaying a fourth interface in response to the user performing the first sliding operation from the screen edge of the electronic device to the inner side, and staying at the end point of the first sliding operation for more than the preset duration, wherein the fourth interface comprises a control bar, the control bar comprises an icon of at least one application, and the at least one application comprises the first application; and
displaying the second interface in response to the user continuing to perform the second sliding operation.

14. The method according to any one of claims 1 to 8, wherein the first operation is: performing a first sliding operation from a screen edge of the electronic device to an inner side, staying at an end point of the first sliding operation for more than preset duration, and then tapping a sixth control, wherein a sliding distance of the first sliding operation exceeds a first preset distance; and
the displaying a second interface in response to a first operation performed by a user on the first interface comprises:
displaying a fifth interface in response to the user performing the first sliding operation from the screen edge of the electronic device to the inner side, and staying at the end point of the first sliding operation for more than the preset duration, wherein the fifth interface comprises a control bar, the control bar comprises an icon of at least one application and the sixth control, and the at least one application comprises the first application; and
displaying the second interface in response to the user tapping the sixth control.

15. The method according to any one of claims 1 to 14, wherein the second operation and the third operation are continuous and uninterrupted operations; and the fourth operation and the fifth operation are continuous and uninterrupted operations.

16. The method according to any one of claims 1 to 15, wherein the displaying a second interface in response to a first operation performed by a user in the first interface comprises:
extracting target content in the first interface in response to the first operation, wherein the target content comprises the first content and the second content; and
displaying the second interface according to the target content.

17. A data sharing method, wherein the method is performed by an electronic device, and the method comprises:
displaying a first interface, wherein the first interface comprises a first control and a second control;
displaying a third control in response to a first operation of a user acting on the first control;
detecting a second operation of dragging the third control into a first region on a screen;
displaying an icon of a first application in response to the second operation;
detecting a third operation of continuing to drag the third control into a region in which the icon of the first application is located and releasing the third control;
sharing first data corresponding to the third control with the first application in response to the third operation;
displaying a fourth control in response to a fourth operation of the user acting on the second control;
detecting a fifth operation of dragging the fourth control into the first region;
displaying an icon of a second application in response to the fifth operation;
detecting a sixth operation of continuing to drag the fourth control into a region in which the icon of the second application is located and releasing the fourth control; and
sharing second data corresponding to the fourth control with the second application in response to the sixth operation.

18. The method according to claim 17, wherein before the displaying a first interface, the method further comprises:
displaying a second interface, wherein the second interface comprises first content and second content; and the first content is content corresponding to the first data, and the second content is content corresponding to the second data; and
displaying the first interface in response to a seventh operation performed by the user in the second interface, wherein the first control is a control corresponding to the first content, and the second control is a control corresponding to the second content.

19. The method according to claim 18, wherein the seventh operation is one of a double-finger long press operation, a three-finger leftward sliding operation, a three-finger rightward sliding operation, a knuckle upward sliding operation, a knuckle leftward sliding operation, or a knuckle rightward sliding operation.

20. The method according to claim 18 or 19, wherein the displaying an icon of a first application in response to the second operation comprises:
displaying a third interface in response to the second operation, wherein the third interface comprises content of the second interface and a control bar, the control bar comprises an icon of at least one application, the at least one application comprises the first application, and the content of the second interface is displayed with a right perspective effect.

21. The method according to claim 20, wherein the at least one application comprises an application that matches the first content.

22. The method according to claim 20 or 21, wherein before the displaying a fourth control in response to a fourth operation of the user acting on the second control, the method further comprises:
restoring display of the first interface.

23. The method according to claim 20 or 21, wherein the third interface comprises the first control and the second control.

24. The method according to any one of claims 17 to 23, wherein the first application is the same as or different from the second application.

25. An electronic device, comprising a processor, a memory, and an interface, wherein
the processor, the memory, and the interface cooperate with each other, so that the electronic device performs the method according to any one of claims 1 to 24.

26. A computer-readable storage medium, wherein the computer-readable storage medium stores a computer program, and when the computer program is executed by a processor, the processor is enabled to perform the method according to any one of claims 1 to 24.
